# EUROPEAN PATENT APPLICATION

(11) **EP 3 905 754 A1**
(43) Date of publication of application: **03.11.2021**
(21) Application number: 19906462.7
(22) Date of filing: 13.12.2019
(51) Int. Cl.: H04W 24/02, H04W 40/34, H04W 28/08, H04W 84/12, H04W 84/20, H04W 84/22

(54) **COMMUNICATION DEVICE AND COMMUNICATION CONTROL METHOD**

(30) Priority: 27.12.2018 JP 2018244222
(71) Applicant: Sony Group Corporation, 108-0075 Tokyo (JP)
(72) Inventor: SUGAYA, Shigeru, Tokyo 108-0075 (JP)
(74) Representative: D Young & Co LLP
(86) International application number: PCT/JP2019/048898
(87) International publication number: WO 2020/137608

(57) **Abstract**

The present technology relates to a communication apparatus and a communication control method that make it possible to enhance the flexibility of a communication network.

A communication apparatus includes a monitoring section that monitors a status of a communication network having a hierarchical structure, a role setting section that sets a role in the hierarchical structure on the basis of the status of the communication network, and an operation control section that controls execution of operation of the role that has been changed. The present technology can be applied to a communication apparatus that performs wireless communication in a communication network, for example.

## Description

### [Technical Field]

The present technology relates to a communication apparatus and a communication control method, and in particular, relates to a communication apparatus and a communication control method that are to enhance the flexibility of a communication network.

### [Background Art]

There has been proposed a conventional technology regarding a mesh network, in which technology a gateway collects such information as a link rate and a channel state from each access point or station and decides optimum station-access point association, backhaul/routing, and band allocation (see PTL 1, for example).

In addition, there has been proposed a conventional technology in which the role of a network device can be switched between the role of an access point and the role of a station by referring to access point credentials (see PTL 2, for example).

### [Citation List]

### [Patent Literature]

[PTL 1]
   JP 2011-514117T
[PTL 2]
   JP 2016-506132T

### [Summary]

### [Technical Problems]

However, in the invention described in PTL 1, switching of the roles between an access point and a station is not examined. In addition, the invention described in PTL 2 does not allow switching of the roles between an access point and a station while a network is in use.

The present technology has been made in view of such a circumstance and is aimed to enhance the flexibility of a communication network.

### [Solution to Problems]

A communication apparatus according to one aspect of the present technology includes a monitoring section that monitors a status of a communication network having a hierarchical structure, a role setting section that sets a role in the hierarchical structure on the basis of the status of the communication network, and an operation control section that controls execution of operation of the role that has been changed.

A communication control method according to one aspect of the present technology is a communication control method performed by a communication apparatus, the communication control method including monitoring a status of a communication network having a hierarchical structure, setting a role in the hierarchical structure on the basis of the status of the communication network, and controlling execution of operation of the role that has been changed.

In one aspect of the present technology, a status of a communication network having a hierarchical structure is monitored, a role in the hierarchical structure is set on the basis of the status of the communication network, and execution of operation of the role that has been changed is controlled.

### [Brief Description of Drawings]

[FIG. 1]

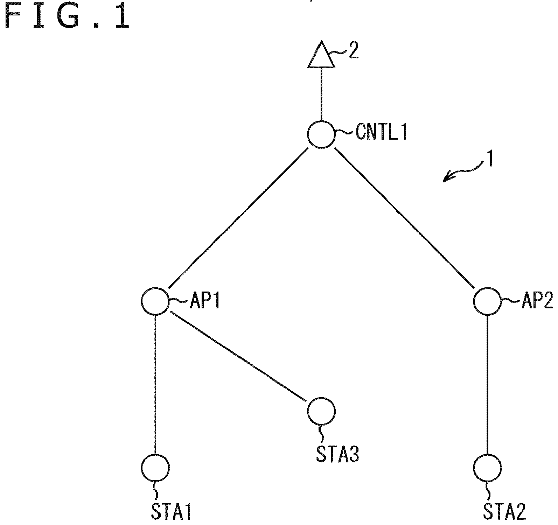

   FIG. 1 is a diagram depicting a configuration example of a communication network to which the present technology is applied.
[FIG. 2]

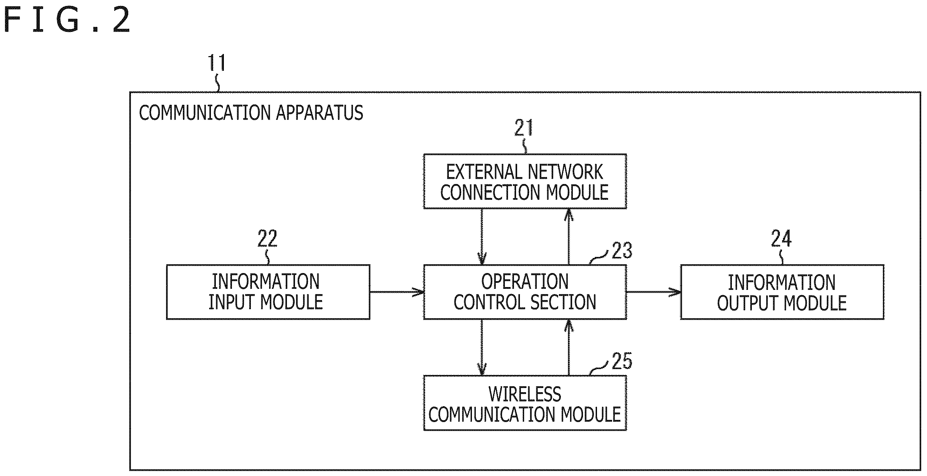

   FIG. 2 is a block diagram depicting a configuration example of a communication apparatus to which the present technology is applied.
[FIG. 3]

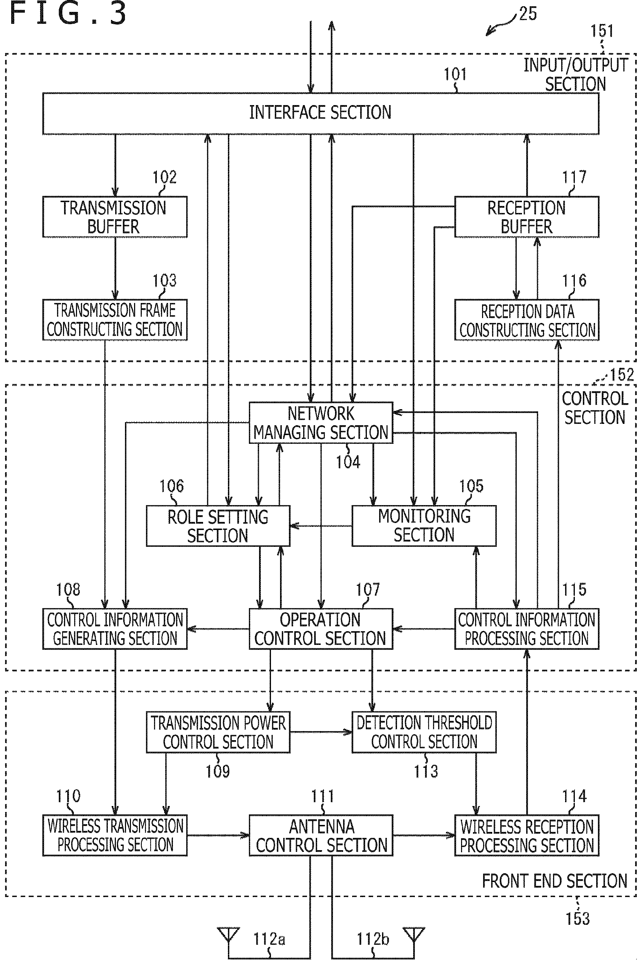

   FIG. 3 is a block diagram depicting a configuration example of a wireless communication module.
[FIG. 4]

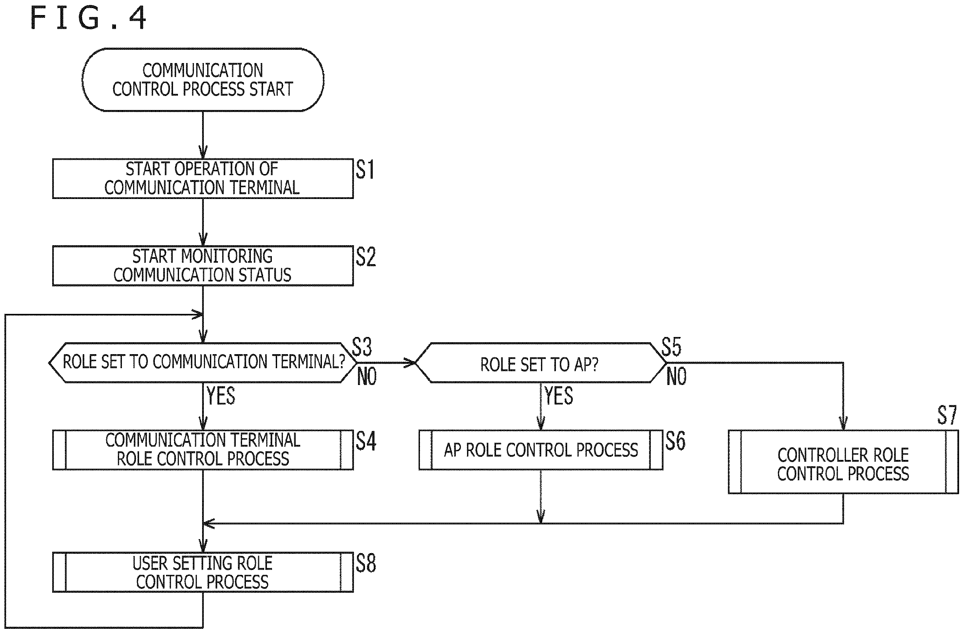

   FIG. 4 is a flowchart for explaining a communication control process.
[FIG. 5]

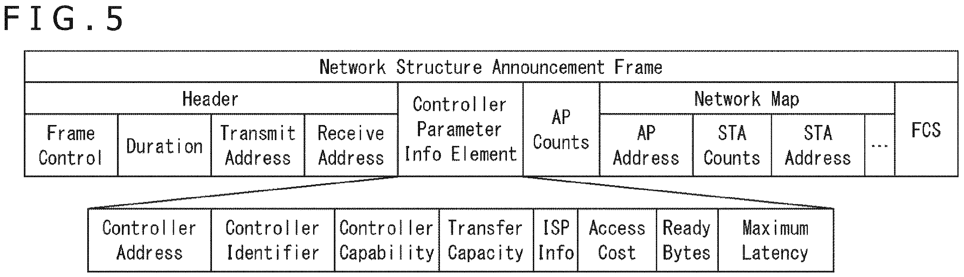

   FIG. 5 is a diagram depicting a configuration example of Network Structure Announcement Frame.
[FIG. 6]

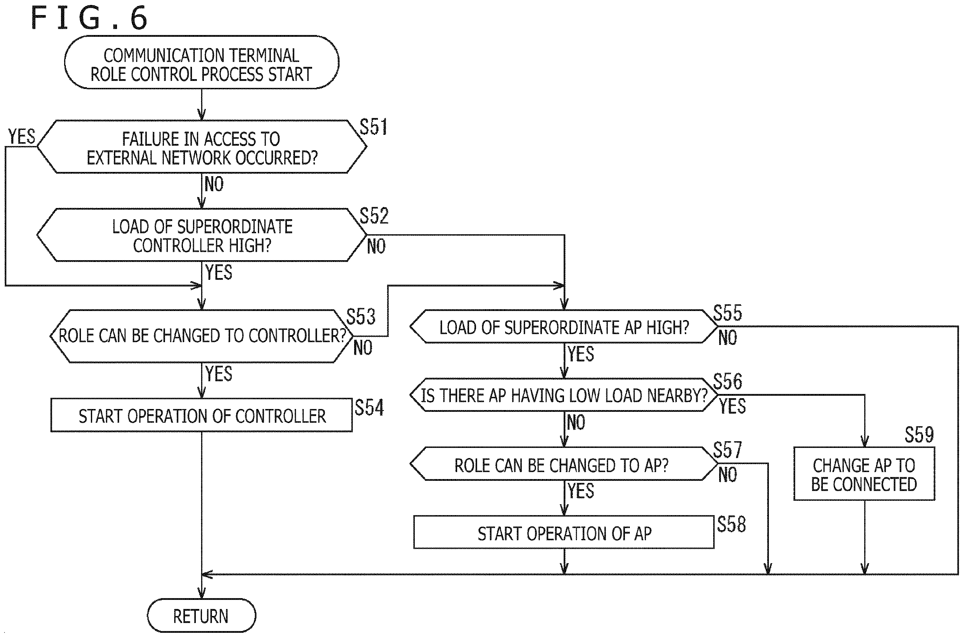

   FIG. 6 is a flowchart for explaining a communication terminal role control process.
[FIG. 7]

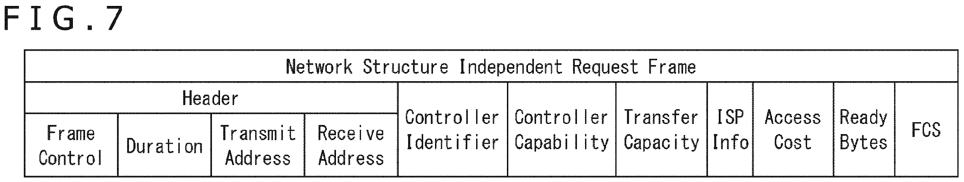

   FIG. 7 is a diagram depicting a configuration example of Network Structure Independent Request Frame.
[FIG. 8]

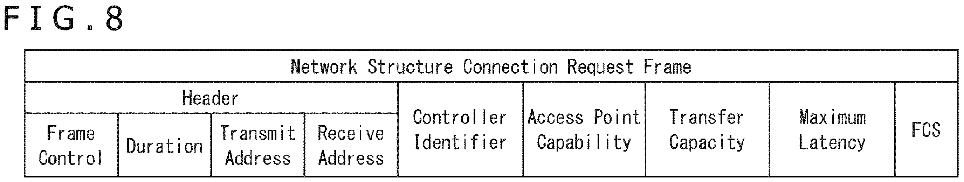

   FIG. 8 is a diagram depicting a configuration example of Network Structure Connection Request Frame.
[FIG. 9]

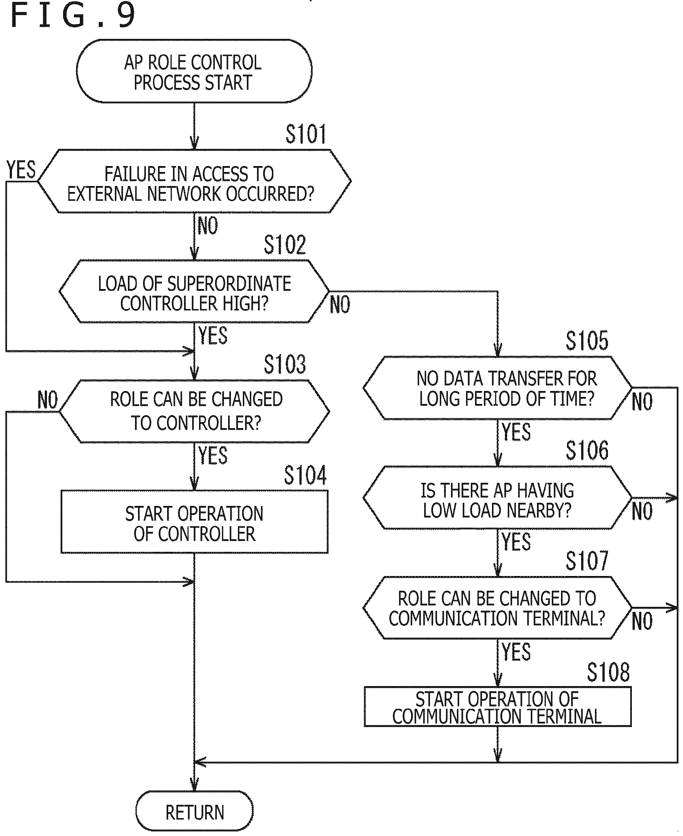

   FIG. 9 is a flowchart for explaining an access point role control process.
[FIG. 10]

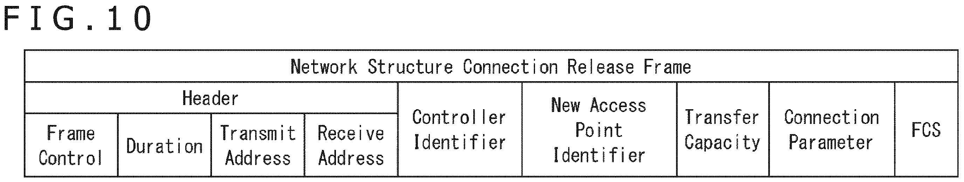

   FIG. 10 is a diagram depicting a configuration example of Network Structure Connection Release Frame.
[FIG. 11]

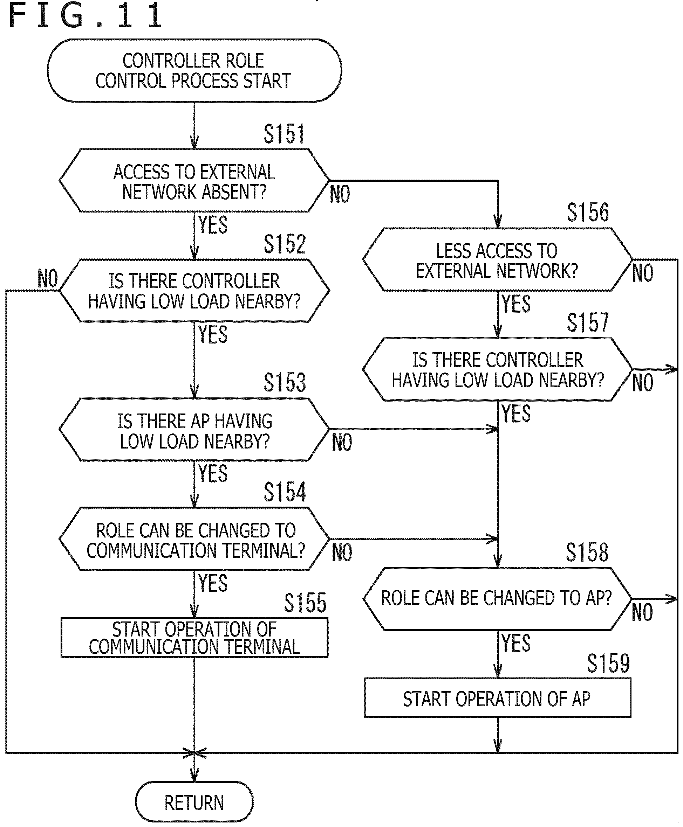

   FIG. 11 is a flowchart for explaining a controller role control process.
[FIG. 12]

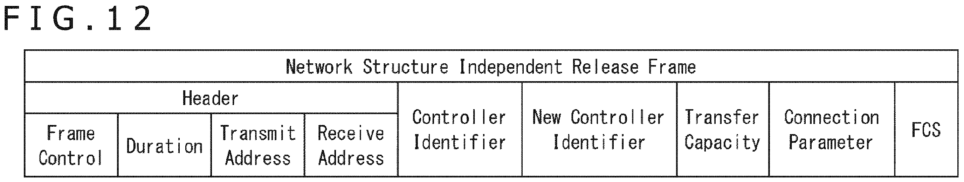

   FIG. 12 is a diagram depicting a configuration example of Network Structure Independent Release Frame.
[FIG. 13]

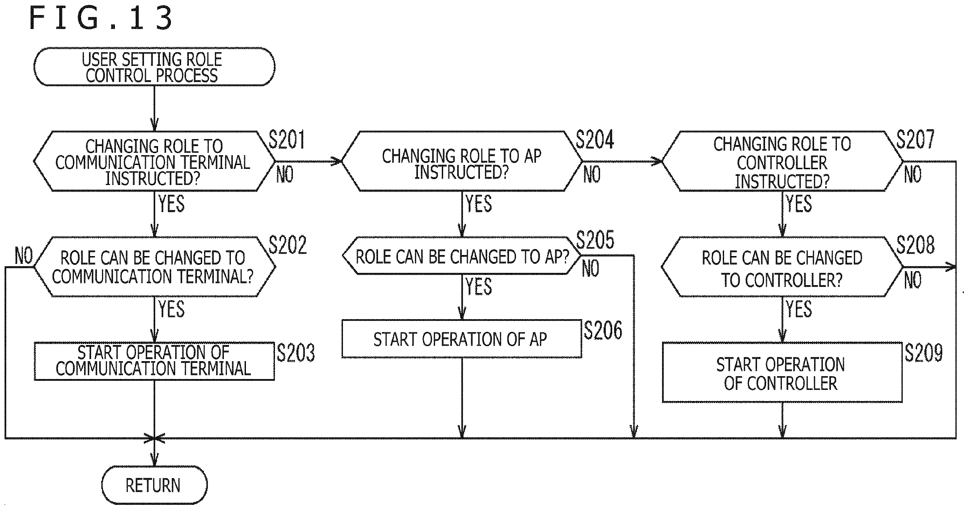

   FIG. 13 is a flowchart for explaining a user setting role control process.
[FIG. 14]

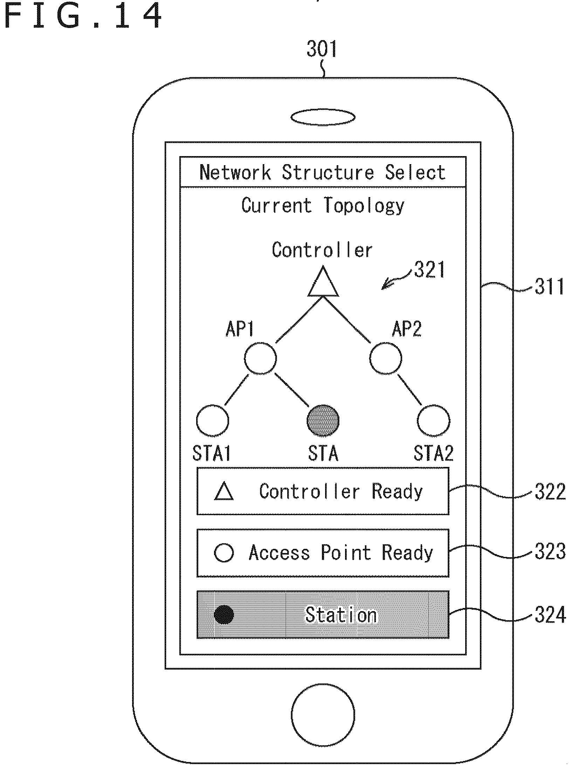

   FIG. 14 is a diagram depicting an example of an operation screen.
[FIG. 15]

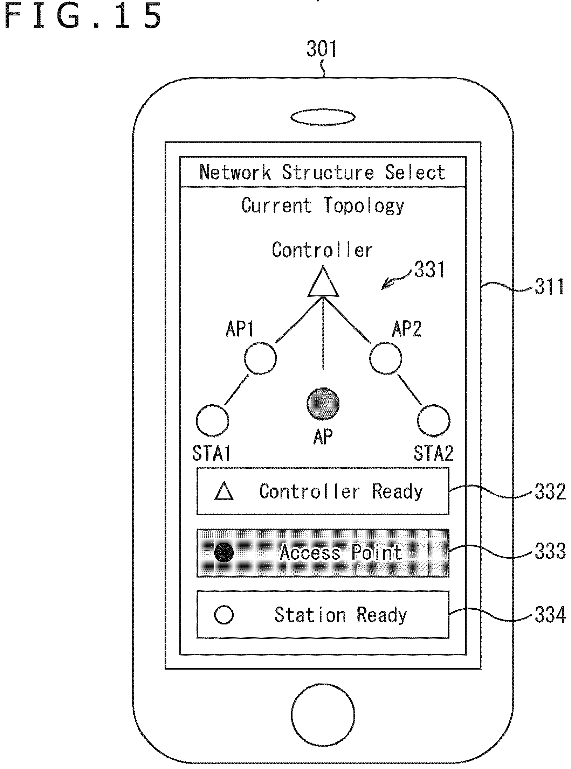

   FIG. 15 is a diagram depicting an example of the operation screen.
[FIG. 16]

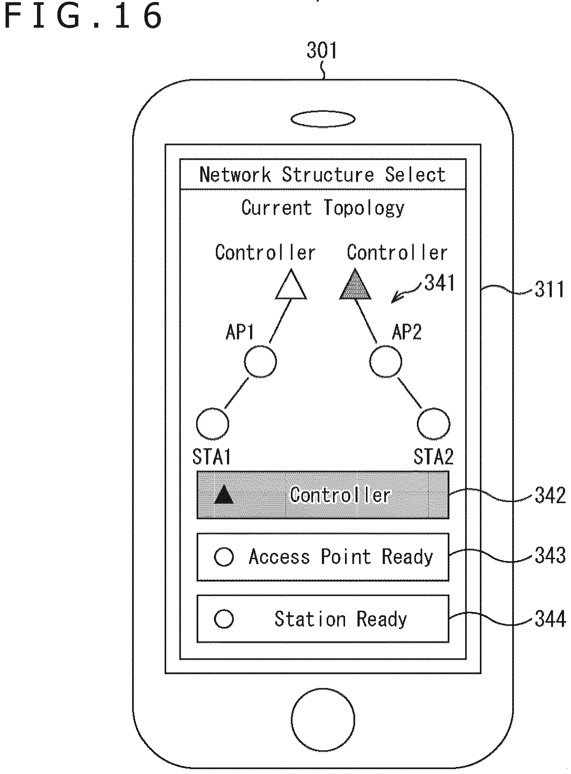

   FIG. 16 is a diagram depicting an example of the operation screen.
[FIG. 17]

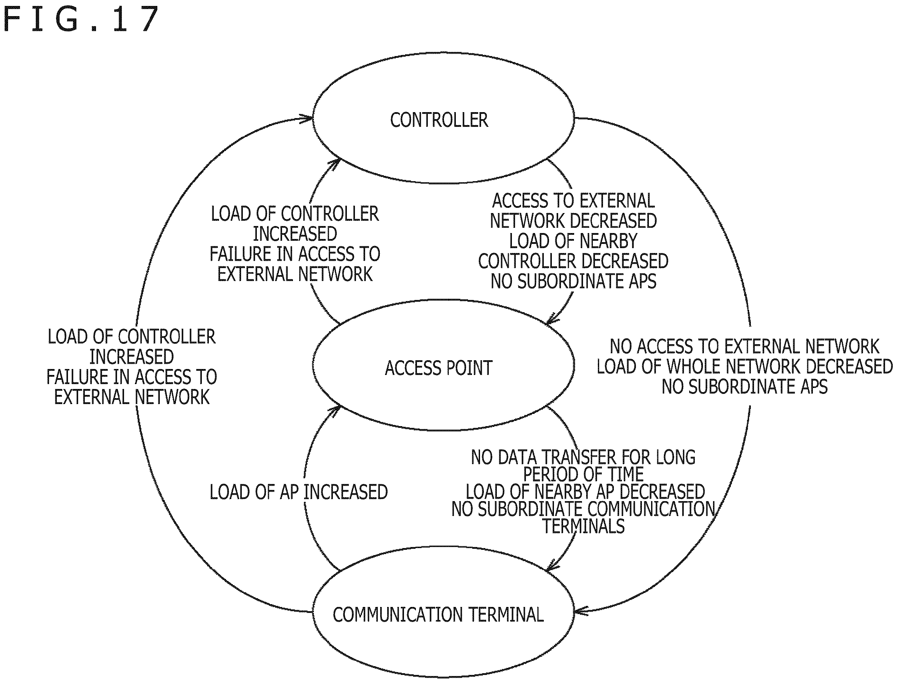

   FIG. 17 is a diagram depicting a state transition diagram of the communication apparatus.
[FIG. 18]

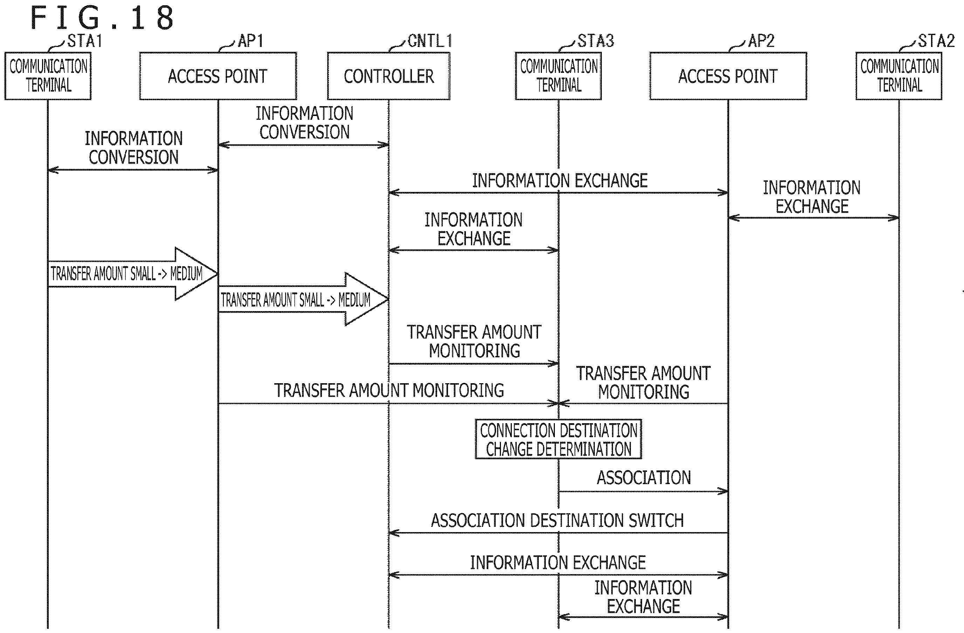

   FIG. 18 is a diagram depicting an operation sequence of the communication network.
[FIG. 19]

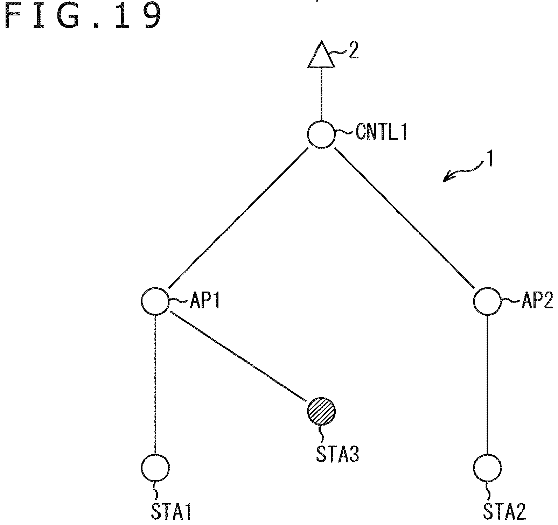

   FIG. 19 is a diagram depicting a configuration example of the communication network.
[FIG. 20]

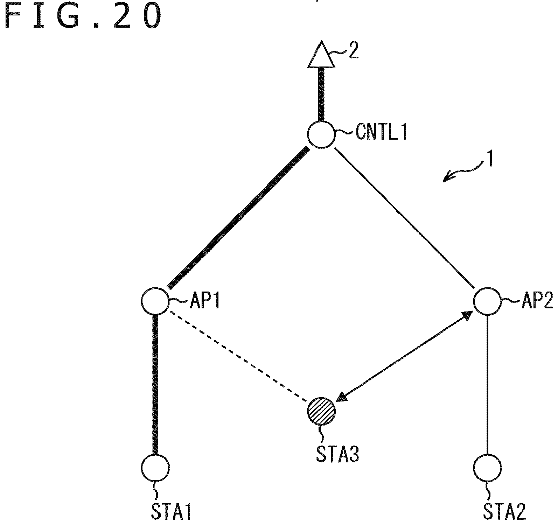

   FIG. 20 is a diagram depicting a configuration example of the communication network.
[FIG. 21]

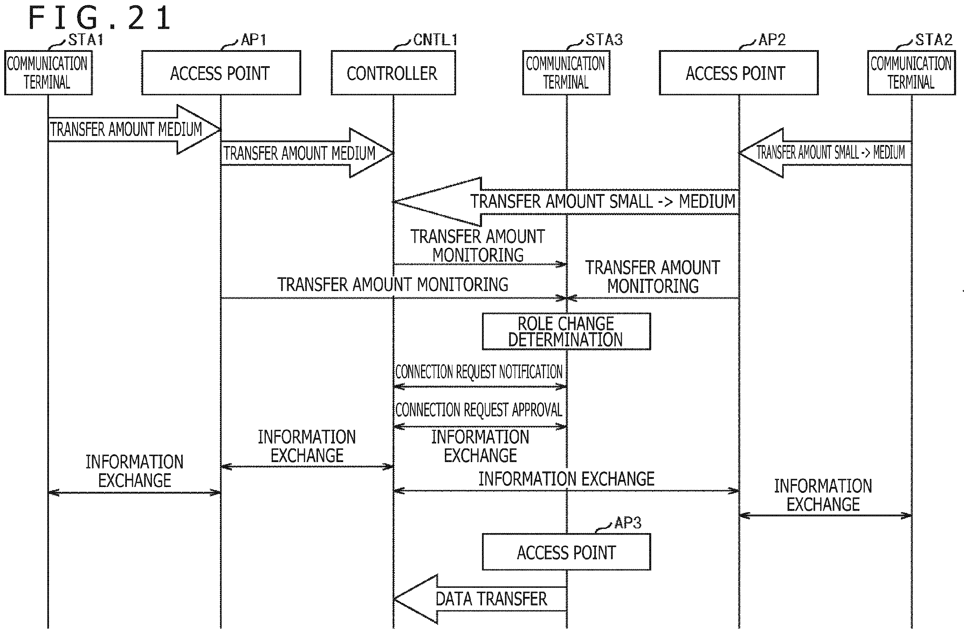

   FIG. 21 is a diagram depicting an operation sequence of the communication network.
[FIG. 22]

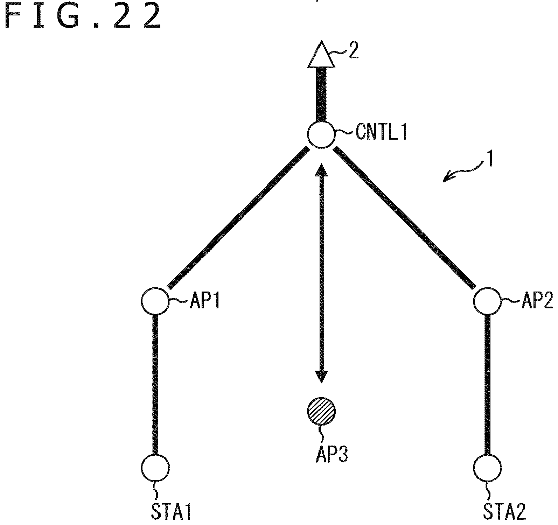

   FIG. 22 is a diagram depicting a configuration example of the communication network.
[FIG. 23]

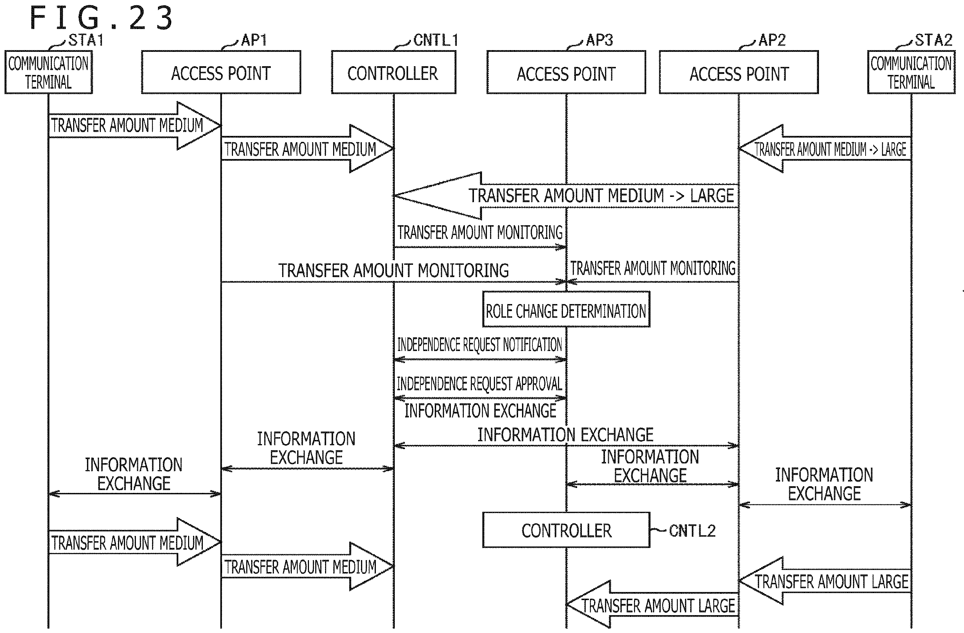

   FIG. 23 is a diagram depicting an operation sequence of the communication network.
[FIG. 24]

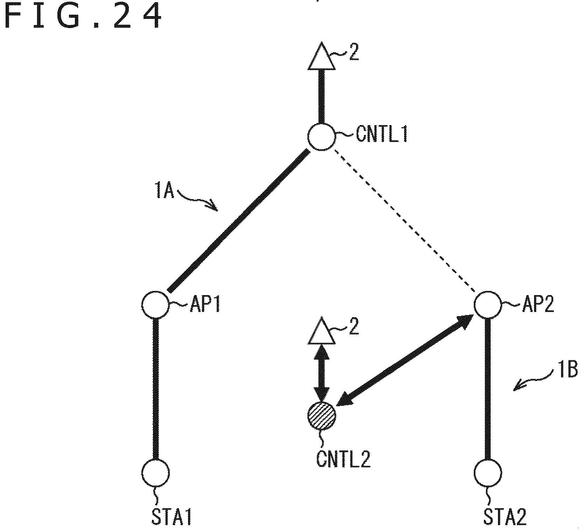

   FIG. 24 is a diagram depicting a configuration example of the communication network.
[FIG. 25]

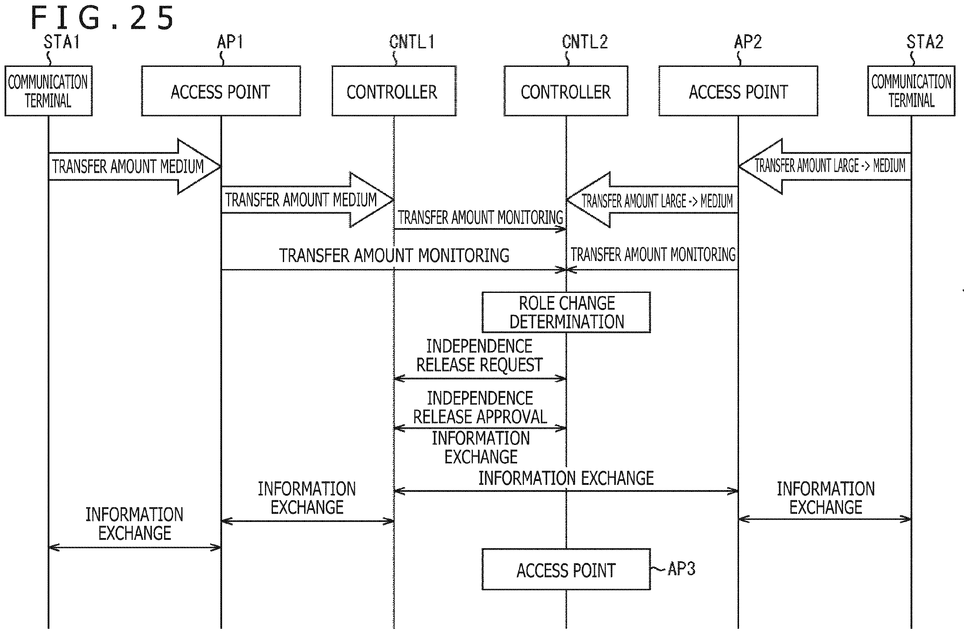

   FIG. 25 is a diagram depicting an operation sequence of the communication network.
[FIG. 26]

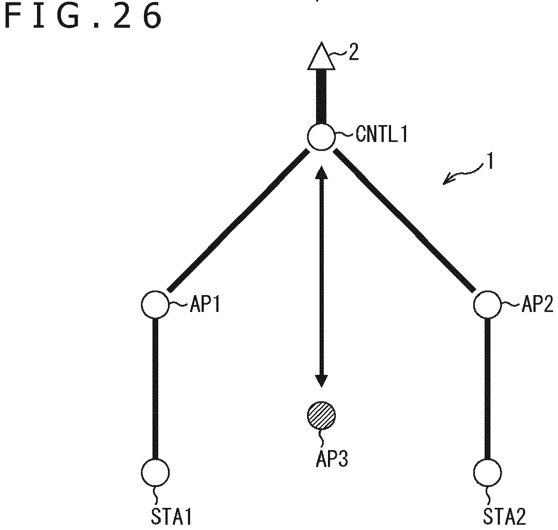

   FIG. 26 is a diagram depicting a configuration example of the communication network.
[FIG. 27]

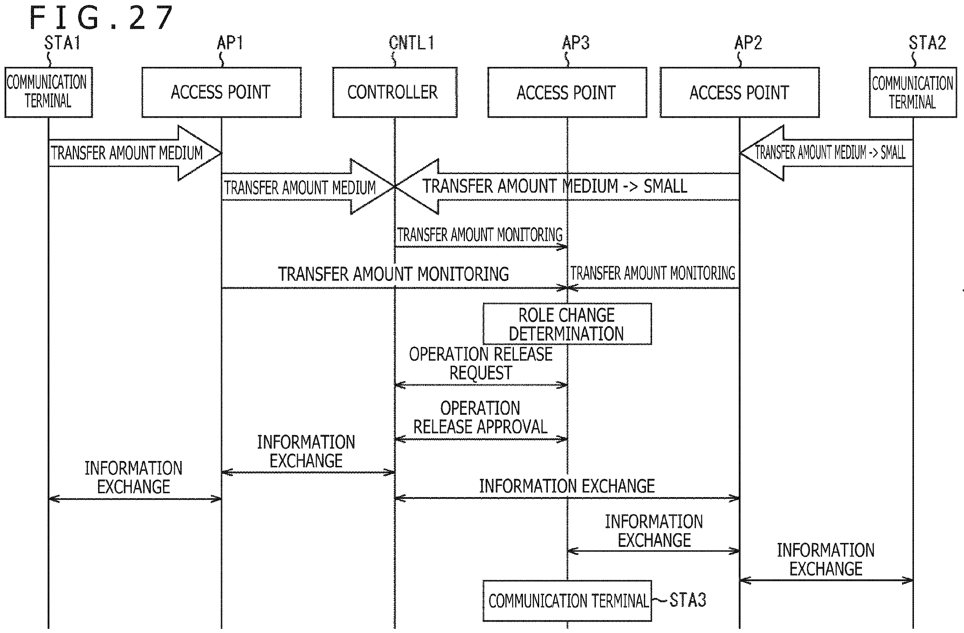

   FIG. 27 is a diagram depicting an operation sequence of the communication network.
[FIG. 28]

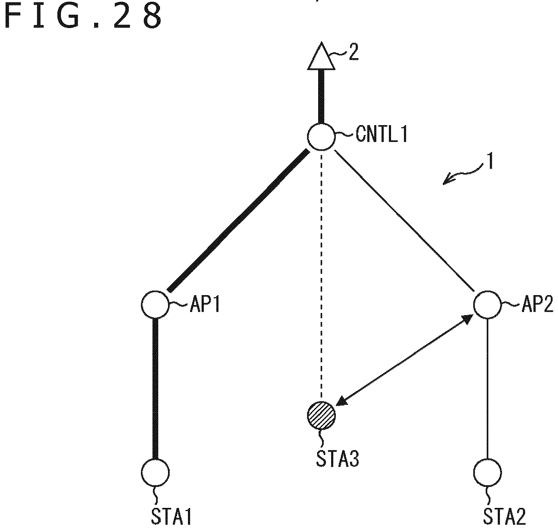

   FIG. 28 is a diagram depicting a configuration example of the communication network.
[FIG. 29]

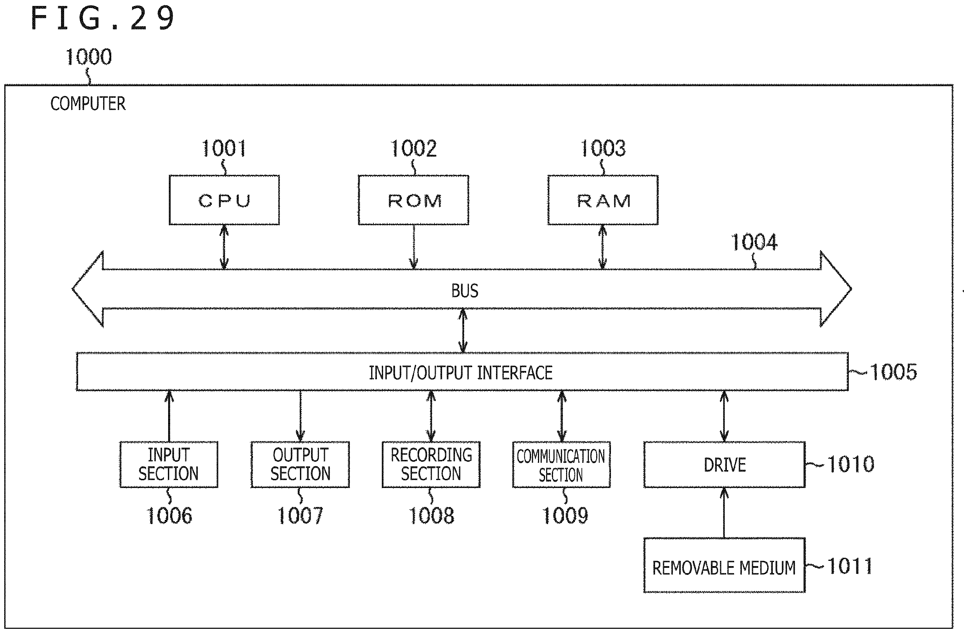

   FIG. 29 is a diagram depicting a configuration example of a computer.

### [Description of Embodiments]

Hereinafter, modes for carrying out the present technology are explained. Explanations are given in the following order.
1. Embodiments
2. Modification Examples
3. Others

### <<1. Embodiments>>

### <Configuration Example of Communication Network 1>

FIG. 1 depicts a configuration example of a communication network 1 to which the present technology is applied.

The communication network 1 is a communication network having a hierarchical structure. The communication network 1 includes a controller CNTL1, an access point AP1, and an access point AP2, as well as communication terminals STA1 to STA3. The communication network 1 includes three separate layers which are a layer including the controller CNTL1, a layer including the access point AP1 and the access point AP2, and a layer including the communication terminals STA1 to STA3.

The controller CNTL1 functions as an access controller or an Internet gateway, for example. The controller CNTL1 is connected to an external network 2 which is an external communication network including the Internet or the like, for example, via a backhaul or the like, and communicates with the external network 2. Note that communication between the controller CNTL1 and the external network 2 may be performed in either a wired or a wireless manner.

The access point AP1 and the access point AP2 relay communication between the controller CNTL1 and the communication terminals STA1 to STA3. The communication between the access point AP1 or the access point AP2 and the controller CNTL1 may be performed in either a wired or a wireless manner. It should be noted however that, as mentioned below, access points to which the present technology is applied perform wireless communication.

Accordingly, each of the communication terminals STA1 to STA3 is connected to the external network 2 via the access point AP1 or the access point AP2 and the controller CNTL1. Note that, in this example depicted, the communication terminal STA1 and the communication terminal STA3 are connected to the external network 2 via the access point AP1 and the controller CNTL1, and the communication terminal STA3 is connected to the external network 2 via the access point AP2 and the controller CNTL1.

Note that the numbers of controllers, access points, and communication terminals in FIG. 1 are examples, and can be changed freely.

In addition, hereinafter, in a case where a communication network (e.g., the communication network 1) including controllers, access points, and communication terminals and an external communication network (e.g., the external network 2) connected with the controllers are distinguished from one another, the former is referred to as an internal network, and the latter is referred to as an external network.

### <Configuration Example of Communication Apparatus 11>

FIG. 2 depicts a configuration example of a communication apparatus (wireless communication apparatus) 11 to which the present technology is applied.

The communication apparatus 11 can play a role of any one of a controller, an access point, and a communication terminal in the communication network 1 in FIG. 1, for example, and the role can also be changed at any point. The communication apparatus 11 includes an external network connection module 21, an information input module 22, an operation control section 23, an information output module 24, and a wireless communication module 25.

For example, the external network connection module 21 includes a circuit having a function for connecting to an external network via a service provider through an optical fiber network or another communication line, a peripheral circuit of the circuit, a microcontroller, a semiconductor memory, and the like. Under the control of the operation control section 23, the external network connection module 21 performs a process related to connection to the external network. For example, the external network connection module 21 realizes a function of a communication modem or the like for connection to the external network in a case where the communication apparatus 11 operates as a controller.

The information input module 22 includes input devices such as a push button, a keyboard, or a touch panel, for example. The information input module 22 supplies the operation control section 23 with input data corresponding to a user instruction and the like.

The operation control section 23 includes a microprocessor, a microcontroller, and the like, for example. The operation control section 23 controls each section (module) for causing the communication apparatus 11 to operate as a controller, an access point, or a communication terminal. In addition, the operation control section 23 performs a process on data supplied from the external network connection module 21, the information input module 22, or the wireless communication module 25. Furthermore, the operation control section 23 supplies the supplied data and data obtained as a result of the process to the external network connection module 21, the information output module 24, or the wireless communication module 25.

For example, the information output module 24 includes output devices including such display elements as a liquid crystal display (LCD: Liquid Crystal Display), an organic EL display (OLED: Organic Light Emitting Diode), or an LED (Light Emitting Diode). The information output module 24 has a function of displaying necessary information to a user on the basis of information supplied from the operation control section 23. Here, the information that is subjected to a process at the information output module 24 includes the operation state of the communication apparatus 11, information obtained from the external network, and the like, for example.

The wireless communication module 25 includes a wireless chip, a peripheral circuit, a microcontroller, a semiconductor memory, and the like, for example. Under the control of the operation control section 23, the wireless communication module 25 performs a process related to wireless communication. Details of the configuration of the wireless communication module 25 are described later with reference to FIG. 3.

Note that, although the wireless communication module on which the wireless communication chip, the peripheral circuit, and the like are mounted is used as an example for explanation here, the present technology can be applied not only to a wireless communication module, but also to a wireless communication chip, wireless communication LSI, and the like, for example. Furthermore, it is optional whether or not the wireless communication module includes antennas.

### <Configuration Example of Wireless Communication Module 25>

FIG. 3 depicts a configuration example of the wireless communication module 25 in FIG. 2.

The wireless communication module 25 includes an interface section 101, a transmission buffer 102, a transmission frame constructing section 103, a network managing section 104, a monitoring section 105, a role setting section 106, an operation control section 107, a control information generating section 108, a transmission power control section 109, a wireless transmission processing section 110, an antenna control section 111, an antenna element 112a, an antenna element 112b, a detection threshold control section 113, a wireless reception processing section 114, a control information processing section 115, a reception data constructing section 116, and a reception buffer 117.

The interface section 101 includes an input/output interface circuit and the like, for example. The interface section 101 is an interface that performs data exchange with the operation control section 23 (FIG. 2), and has a function of exchanging input data and output data in a predetermined signal format. For example, the interface section 101 stores, in the transmission buffer 102, transmission data supplied from the operation control section 23. In addition, the interface section 101 supplies the data supplied from the operation control section 23, to the network managing section 104, the monitoring section 105, and the role setting section 106, as necessary. Further, the interface section 101 supplies data supplied from the network managing section 104 and the role setting section 106 and data stored in the reception buffer 117 to the operation control section 23 as necessary.

The transmission buffer 102 includes a semiconductor memory apparatus such as a buffer memory, for example. The transmission buffer 102 temporarily stores transmission data supplied from the interface section 101.

The transmission frame constructing section 103 reads out transmission data stored in the transmission buffer 102, constructs a data frame for transfer by wireless communication, and supplies the data frame to the control information generating section 108.

The network managing section 104 performs management of network information on the basis of data supplied from the operation control section 23 via the interface section 101, control information supplied from the control information processing section 115, and reception data stored in the reception buffer 117. For example, the network information includes information regarding an internal network (hereinafter, referred to as a principal network) to which the communication apparatus 11 belongs, another internal network (hereinafter, referred to as a peripheral network) surrounding the communication apparatus 11, and an external network connected with the internal networks. The network managing section 104 supplies the network information to the monitoring section 105, the role setting section 106, the operation control section 107, the control information generating section 108, and the control information processing section 115. In addition, the network managing section 104 supplies the network information to the operation control section 23 via the interface section 101.

On the basis of data supplied from the operation control section 23 via the interface section 101, network information supplied from the network managing section 104, control information supplied from the control information processing section 115, and reception data stored in the reception buffer 117, the monitoring section 105 monitors (monitors) the status of the networks (the internal networks (the principal network and the peripheral network) and the external network). The monitoring section 105 supplies information regarding the status of the networks to the role setting section 106.

On the basis of the status of the networks and input data corresponding to a user instruction supplied from the information input module 22 via the operation control section 23 and the interface section 101, the role setting section 106 sets the role of the communication apparatus 11 in the hierarchical structure of the internal networks. That is, the role setting section 106 makes a selection as to whether the communication apparatus 11 performs operation of a controller, an access point, or a communication terminal. The role setting section 106 instructs the operation control section 107 and the operation control section 23 (via the interface section 101) to execute the set role, notifies the network managing section 104 of the set role, and performs other similar processes.

The operation control section 107 controls the wireless communication module 25 such that the communication apparatus 11 performs the role set by the role setting section 106. For example, the operation control section 107 instructs the control information generating section 108 to generate and transmit various types of control information. In addition, the operation control section 107 instructs the transmission power control section 109 to change the power of transmission signals, instructs the detection threshold control section 113 to change a detection threshold of reception signals, and performs other similar processes. Furthermore, the operation control section 107 gives the role setting section 106 a notification as to whether or not the role can be changed to one set by the role setting section 106.

On the basis of an instruction of the operation control section 107, network information, and the like, the control information generating section 108 adds header information, various types of parameters, and the like to data frames, and supplies the data frames to the wireless transmission processing section 110. In addition, on the basis of an instruction of the operation control section 107, network information, and the like, the control information generating section 108 generates control frames, and supplies the control frames to the wireless transmission processing section 110. The control frames are frames used for controlling communication with another communication apparatus. For example, examples of the control frames include a frame related to an association process, a CTS frame, an ACK frame, an RTS frame, a BAR frame, and the like. In addition, examples of the control frames include frames depicted in FIG. 5, FIG. 7, FIG. 8, FIG. 10, FIG. 12, and the like described later.

The transmission power control section 109 controls the wireless transmission processing section 110 following an instruction of the operation control section 107, and controls the transmission power of transmission signals. For example, the transmission power control section 109 controls the transmission power such that the signals do not reach an unnecessary radio wave range at the time of transmission of the frames. In addition, the transmission power control section 109 notifies the detection threshold control section 113 of the set transmission power.

The wireless transmission processing section 110 performs a transmission process of the transmission signals by wireless communication. For example, the wireless transmission processing section 110 converts frames transmitted by wireless communication into baseband signals, performs a process on them as analog signals, and supplies transmission signals obtained as a result of the process to the antenna control section 111.

The antenna control section 111 is connected with the antenna element 112a and the antenna element 112b. For example, the antenna control section 111 performs control of transmitting transmission signals supplied from the wireless transmission processing section 110 via the antenna element 112a and the antenna element 112b, as a spatially multiplexed stream. In addition, the antenna control section 111 receives, via the antenna element 112a and the antenna element 112b, reception signals transmitted to it as a spatially multiplexed stream by wireless communication, and supplies the reception signals to the wireless reception processing section 114.

The detection threshold control section 113 sets a detection threshold for detecting reception signals, following an instruction of the operation control section 107. For example, corresponding to the transmission power control by the transmission power control section 109, the detection threshold control section 113 sets, for the wireless reception processing section 114, a detection threshold on the basis of which reception signals from controllers, access points, and notification terminals within the transmission range of transmission signals can be detected.

The wireless reception processing section 114 performs a process of receiving reception signals by wireless communication. For example, in a case where a predetermined preamble signal is detected in a reception signal supplied from the antenna control section 111, under the control of the detection threshold control section 113, the wireless reception processing section 114 performs a process of receiving subsequent data frames and control frames. The wireless reception processing section 114 supplies the received data frames and control frames to the control information processing section 115.

The control information processing section 115 parses header information of the received frames (data frames and control frames) and the like to thereby determine whether or not the frames are directed to itself (the communication apparatus 11). In a case where the frames are directed to itself, the control information processing section 115 extracts control information necessary for communication control from the frames, and supplies the control information to the network managing section 104, the monitoring section 105, and the operation control section 107. In addition, the control information processing section 115 supplies the data frames directed to itself to the reception data constructing section 116.

The reception data constructing section 116 extracts a data portion of the received data frames, and stores it in the reception buffer 117. In addition, the reception data constructing section 116 combines reception data transmitted to it as separate pieces in plural data frames, to thereby reconstruct the reception data, and stores the reception data in the reception buffer 117.

The reception buffer 117 includes a semiconductor memory apparatus such as a buffer memory, for example. The reception buffer 117 temporarily stores the reception data supplied by the reception data constructing section 116.

Note that, in FIG. 3, sections included in the wireless communication module 25 can be classified into three sections which are an input/output section 151, a control section 152, and a front end section 153 as represented by dotted-line frames, for example.

The input/output section 151 performs processes and control related to input transmission data and output reception data. The input/output section 151 includes the interface section 101, the transmission buffer 102, the transmission frame constructing section 103, the reception data constructing section 116, and the reception buffer 117.

The control section 152 performs control of the wireless communication module 25, and processes and control related to control frames and data frames. The control section 152 includes the network managing section 104, the monitoring section 105, the role setting section 106, the operation control section 107, the control information generating section 108, and the control information processing section 115.

The front end section 153 performs processes and control related to such signals as transmission signals or reception signals. The front end section 153 includes the transmission power control section 109, the wireless transmission processing section 110, the antenna control section 111, the detection threshold control section 113, and the wireless reception processing section 114.

### <Communication Control Process>

Next, a communication control process executed by the communication apparatus 11 is explained with reference to a flowchart in FIG. 4.

This process is started when the power supply of the communication apparatus 11 is turned on, and ends when the power supply of the communication apparatus 11 is turned off, for example.

In Step S1, the communication apparatus 11 starts operation of a communication terminal. Specifically, the role setting section 106 sets the role of the communication apparatus 11 to a communication terminal. The role setting section 106 instructs the operation control section 107 to execute the operation of a communication terminal, instructs the operation control section 23 to execute the operation of a communication terminal via the interface section 101, and performs other similar processes. In addition, the role setting section 106 notifies the network managing section 104 that the role is set to a communication terminal.

Although detailed explanations are omitted, thereafter, under the control of the operation control section 107 and the like, the communication apparatus 11 searches for an access point available for communication. The communication apparatus 11 is then connected to a detected access point in accordance with a predetermined communication protocol.

In Step S2, the communication apparatus 11 starts monitoring of a communication status. Specifically, on the basis of various types of information transmitted from nearby controllers, access points, and communication terminals and various types of information supplied from the external network connection module 21 via the operation control section 23 and the interface section 101, the network managing section 104 starts the management of network information, and supplies the network information to the monitoring section 105, the role setting section 106, the control information generating section 108, and the control information processing section 115, as appropriate. In addition, the network managing section 104 supplies the network information to the operation control section 23 via the interface section 101, as appropriate.

Note that the network information includes information of the internal networks and information of the external network, for example. The information of the internal networks includes, for example, configurations of the principal network and the peripheral network, address information of apparatuses (controllers, access points, and communication terminals) included in the principal network and internal networks, and the like.

In addition, the monitoring section 105 starts monitoring of the status of networks on the basis of various types of information transmitted from nearby controllers, access points, and communication terminals and various types of information supplied from the external network connection module 21 via the operation control section 23 and the interface section 101.

For example, the monitoring section 105 starts monitoring of the status of the internal networks (the principal network and the peripheral network). For example, the monitoring section 105 starts monitoring of loads of apparatuses included in the internal networks and the status of communication between the apparatuses. Loads of the apparatuses that are supposed to be monitored include transfer amounts, throughputs, duration of occupancy in the internal networks, waiting time, and the like of the apparatuses, for example. In addition, for example, the monitoring section 105 starts monitoring of the status of communication between the apparatuses in the internal networks. The status of communication between the apparatuses that is supposed to be monitored includes the status as to whether or not there is a connection between apparatuses or whether or not there is a connection failure, bandwidths, transfer speeds, transfer amounts, throughputs, and the like, for example.

In addition, the monitoring section 105 starts monitoring of the status of access from the internal networks to the external network. For example, the monitoring section 105 starts monitoring of the status as to whether or not there are connections between the internal networks and the external network or whether or not there is an access failure, bandwidths, transfer speeds, transfer amounts, delay time, and the like.

The monitoring section 105 supplies information regarding the status of the networks to the role setting section 106, as appropriate.

FIG. 5 depicts a configuration example of Network Structure Announcement Frame used for the monitoring of the status of the networks. Network Structure Announcement Frame is a control frame for giving notification of the configuration of a principal network to which a controller belongs, and is broadcast regularly from the controller. Accordingly, in a case where the communication apparatus 11 operates as a controller, Network Structure Announcement Frame is broadcast regularly from the communication apparatus 11.

Network Structure Announcement Frame includes Header, Controller Parameter Info Element, AP Counts, Network Map, and FCS.

Header includes Frame Control, Duration, Transmit Address, and Receive Address.

Frame Control represents the format of the frame.

Duration represents the duration of the frame.

Transmit Address represents an address (e.g., MAC address) of the transmitting side (source of transmission) of the frame. In this frame, an address of the controller that is the source-of-transmission of the frame is set.

Receive Address represents an address (e.g., MAC address) of the receiver side (destination of transmission) of the frame. In this frame, a broadcast address is set.

Controller Parameter Info Element represents information regarding the controller that is the source-of-transmission of the frame. Controller Parameter Info Element includes Controller Address, Controller Identifier, Controller Capability, Transfer Capacity, ISP Info, Access Cost, Ready Bytes, and Maximum Latency.

Controller Address represents an address (e.g., MAC address) of the controller.

Controller Identifier represents identification information (e.g., Service Set Identifier (SSID), etc.) of the controller.

Controller Capability represents information regarding the capability of the controller. For example, Controller Capability represents a supported wireless LAN system standard, the maximum transfer rate, parameters of supported multiplex communication, and the like.

Transfer Capacity represents information regarding the transfer capacity of the external network. For example, Transfer Capacity represents the monthly maximum available capacity, the maximum transfer rate, and the like of the external network.

ISP Info represents information for connection to an Internet service provider that is available to the controller for connection to an external network.

Access Cost represents information regarding a connection fee of the Internet service provider that is available to the controller. For example, in the case of a measured rate, Access Cost represents a connection fee per unit time or unit data amount, and in the case of a fixed rate, Access Cost represents a monthly fixed fee.

Ready Bytes represent information regarding the transfer capacity of an external network that is available to the controller at the current time point. For example, Ready Bytes represent a parameter regarding the remaining amount of data that is allowed to be transferred in the current month as measured in gigabytes, or the like.

Maximum Latency represents the maximum amount of delay that is tolerated in a case where connection to the external network is established via the controller.

AP Counts represent the number of access points connected to the controller.

Network Map represents information regarding a topology map of the principal network to which the controller belongs. Network Map includes AP Address, STA Counts, and STA Address.

AP Address represents an address (e.g., MAC address) of an access point connected to the controller.

STA Counts represent the number of communication terminals connected to the access point represented by AP Address.

STA Address represents addresses (e.g., MAC addresses) of communication terminals connected to the access point represented by AP Address.

Note that the data set of AP Address, STA Counts, and STA Address is stored in Network Map for each access point connected to the controller. Accordingly, the number of data sets stored in Network Map equals the number of the access points connected to the controller.

FCS (Frame Check Sequence) for error detection is added to the end of the frame.

In Step S3, the role setting section 106 determines whether or not the role is set to a communication terminal. In a case where it is determined that the role is set to a communication terminal, the process proceeds to Step S4.

In Step S4, the communication apparatus 11 executes a communication terminal role control process. By this process, the role of the communication apparatus 11 is changed from a communication terminal to another role, as necessary. Details of this process are described later with reference to FIG. 6.

Thereafter, the process proceeds to Step S8.

On the other hand, in a case where it is determined in Step S3 that the role is not set to a communication terminal, the process proceeds to Step S5.

In Step S5, the role setting section 106 determines whether or not the role is set to an access point. In a case where it is determined that the role is set to an access point, the process proceeds to Step S6.

In Step S6, the communication apparatus 11 executes an AP role control process. By this process, the role of the communication apparatus 11 is changed from an access point to another role, as necessary. Details of this process are described later with reference to FIG. 9.

Thereafter, the process proceeds to Step S8.

On the other hand, in a case where it is determined in Step S5 that the role is not set to an AP, that is, in a case where the role is set to a controller, the process proceeds to Step S7.

In Step S7, the communication apparatus 11 executes a controller role control process. By this process, the role of the communication apparatus 11 is changed from a controller to another role, as necessary. Details of this process are described later with reference to FIG. 11.

Thereafter, the process proceeds to Step S8.

In Step S8, the communication apparatus 11 executes a user setting role control process. By this process, the role of the communication apparatus 11 is changed according to user settings. Details of this process are described later with reference to FIG. 13.

Thereafter, the process returns to Step S3, and the processes of Step S3 to Step S8 are executed repeatedly.

### <Communication Terminal Role Control Process>

Next, details of the communication terminal role control process in Step S4 in FIG. 4 are explained with reference to a flowchart in FIG. 6.

In Step S51, on the basis of information from the monitoring section 105, the role setting section 106 determines whether or not a failure in access to the external network has occurred. In a case where it is determined that a failure in access to the external network has not occurred, the process proceeds to Step S52.

In Step S52, on the basis of information from the monitoring section 105, the role setting section 106 determines whether or not the load of a superordinate controller is high. For example, in a case where the load of a controller with which the communication apparatus 11 is connected via an access point, that is, a superordinate controller, in the latest predetermined length of time is higher than a predetermined upper limit value, the role setting section 106 determines that the load of the superordinate controller is high, and the process proceeds to Step S53. Note that a content and an upper limit value of the load to be used as a determination criterion can be set as desired.

On the other hand, in a case where it is determined in Step S51 that a failure in access to the external network has occurred, the process in Step S52 is skipped, and the process proceeds to Step S53.

In Step S53, the role setting section 106 determines whether or not the role can be changed to a controller.

Specifically, on the basis of information from the monitoring section 105, the role setting section 106 determines whether or not a direct connection to the external network can be established. In a case where it is determined that a direct connection to the external network can be established, the role setting section 106 instructs the operation control section 107 to change the role to a controller.

The operation control section 107 instructs the control information generating section 108 to request the superordinate controller to allow the communication apparatus 11 to be independent as a controller. The control information generating section 108 generates Network Structure Independent Request Frame, and supplies it to the wireless transmission processing section 110. The wireless transmission processing section 110 transmits a transmission signal including Network Structure Independent Request Frame to the superordinate controller, via the antenna control section 111 as well as the antenna element 112a and the antenna element 112b.

FIG. 7 depicts a configuration example of Network Structure Independent Request Frame. Network Structure Connection Request Frame is a control frame to be transmitted to a superordinate controller for requesting the superordinate controller to allow a communication terminal or an access point to be independent as a controller.

Network Structure Independent Request Frame includes Header and FCS similar to those in Network Structure Connection Request Frame in FIG. 5 that are arranged at the beginning and end of it, respectively. Note that an address of a source-of-transmission communication terminal or access point is set in Transmit Address in Header, and an address of a destination-of-transmission controller is set in Receive Address in Header.

Controller Identifier, Controller Capability, Transfer Capacity, ISP Info, Access Cost, and Ready Bytes are arranged between Header and FCS.

Controller Identifier represents identification information of the superordinate controller.

Controller Capability represents information regarding the capability of the communication terminal or access point as a controller. The content of the information is similar to that of Controller Capability in Network Structure Announcement Frame in FIG. 5.

Transfer Capacity represents information regarding the transfer capacity of the external network in a case where the communication terminal or access point operates as a controller. The content of the information is similar to that of Transfer Capacity in Network Structure Announcement Frame in FIG. 5.

ISP Info represents information for connection to an Internet service provider that is available for connection to the external network in a case where the communication terminal or access point operates as a controller.

Access Cost represents information regarding a connection fee of the Internet service provider that is available to the communication terminal or access point in a case where the communication terminal or access point operates as a controller. The content of the information is similar to that of Access Cost in Network Structure Announcement Frame in FIG. 5.

Ready Bytes represent information regarding the transfer capacity of the external network that is available to the communication terminal or access point at the current time point in a case where the communication terminal or access point operates as a controller. The content of the information is similar to that of Ready Bytes in Network Structure Announcement Frame in FIG. 5.

In respect to this, the controller determines whether or not to approve independence of the communication apparatus 11 as a controller, and transmits a response signal including a control frame that includes control information representing approval or disapproval.

The wireless reception processing section 114 receives the response signal via the antenna element 112a and the antenna element 112b as well as the antenna control section 111, extracts the control frame from the response signal, and supplies the control frame to the control information processing section 115. The control information processing section 115 supplies the control information included in the control frame to the operation control section 107. On the basis of the control information, the operation control section 107 gives the role setting section 106 a notification as to whether or not the superordinate controller approves the independence of the communication apparatus 11 as a controller.

In a case where the superordinate controller approves the independence of the communication apparatus 11 as a controller, the role setting section 106 determines that the role can be changed to a controller, and the process proceeds to Step S54.

In Step S54, the communication apparatus 11 starts operation of a controller. Specifically, the role setting section 106 gives the network managing section 104 a notification that the role has been changed to a controller, and also gives the operation control section 23 the notification via the interface section 101. The operation control section 23 and the operation control section 107 start control of operation performed as a controller.

Although detailed explanations are omitted, thereafter, under the control of the operation control section 107 and the like, the communication apparatus 11 releases the connection with an access point in accordance with a predetermined communication protocol. The communication apparatus 11 is then directly connected with the external network, as a controller.

Thereafter, the communication terminal role control process ends.

On the other hand, in a case where, in Step S53, a direct connection to the external network cannot be established, or the superordinate controller does not approve the independence of the communication apparatus 11 as a controller, the role setting section 106 determines that the role cannot be changed to a controller, and the process proceeds to Step S55.

In addition, in a case where, in Step S52, for example, the load of the superordinate controller in the latest predetermined length of time is equal to or lower than the predetermined upper limit value, the role setting section 106 determines that the load of the superordinate controller is not high, and the process proceeds to Step S55.

In Step S55, on the basis of information from the monitoring section 105, the role setting section 106 determines whether or not the load of a superordinate access point is high. For example, in a case where the load of an access point with which the communication apparatus 11 is connected, that is, a superordinate access point, in the latest predetermined length of time is higher than a predetermined upper limit value, the role setting section 106 determines that the load of the superordinate access point is high, and the process proceeds to Step S56. Note that a content and an upper limit value of the load to be used as a determination criterion can be set as desired.

In Step S56, on the basis of information from the monitoring section 105, the role setting section 106 determines whether or not there is a nearby access point having a low load. For example, in a case where there are no access points having loads which have been lower than a predetermined lower limit value in the latest predetermined length of time within the communication coverage of the communication apparatus 11, the role setting section 106 determines that there are no nearby access points having low loads, and the process proceeds to Step S57. Note that a content and a lower limit value of the load to be used as a determination criterion can be set as desired.

In Step S57, the role setting section 106 determines whether or not the role can be changed to an access point.

Specifically, on the basis of information from the monitoring section 105, the role setting section 106 determines whether or not an indirectly connected superordinate controller is within the communication coverage of the communication apparatus 11. In a case where it is determined that the superordinate controller is within the communication coverage of the communication apparatus 11, the role setting section 106 instructs the operation control section 107 to change the role to an access point.

The operation control section 107 instructs the control information generating section 108 to request the superordinate controller to allow the communication apparatus 11 to be connected as an access point. The control information generating section 108 generates Network Structure Connection Request Frame, and supplies it to the wireless transmission processing section 110. The wireless transmission processing section 110 transmits a transmission signal including Network Structure Connection Request Frame to the superordinate controller via the antenna control section 111 as well as the antenna element 112a and the antenna element 112b.

FIG. 8 depicts a configuration example of Network Structure Connection Request Frame. Network Structure Connection Request Frame is a control frame to be transmitted to a superordinate controller for requesting the superordinate controller to allow a communication terminal to be connected as an access point.

Network Structure Connection Request Frame includes Header and FCS similar to those in Network Structure Connection Request Frame in FIG. 5 that are arranged at the beginning and end of it, respectively. Note that an address of a source-of-transmission communication terminal is set in Transmit Address in Header, and an address of a destination-of-transmission controller is set in Receive Address in Header.

Controller Identifier, Access Point Capability, Transfer Capacity, and Maximum Latency are arranged between Header and FCS.

Controller Identifier represents identification information of the superordinate controller.

Access Point Capability represents information regarding the capability of the communication terminal as an access point. For example, Access Point Capability represents a supported wireless LAN standard, the maximum transfer rate, parameters of supported multiplex communication, and the like.

Transfer Capacity represents information regarding the transfer capacity of the external network in a case where the communication terminal operates as an access point. The content of the information is similar to that of Transfer Capacity in Network Structure Announcement Frame in FIG. 5.

Maximum Latency represents the maximum amount of delay that is tolerated in a case where the communication terminal operates as an access point.

In relation to this, the controller determines whether or not to approve connection of the communication apparatus 11 as an access point, and transmits a response signal including a control frame that includes control information representing approval or disapproval.

The wireless reception processing section 114 receives the response signal via the antenna element 112a and the antenna element 112b as well as the antenna control section 111, extracts the control frame from the response signal, and supplies the control frame to the control information processing section 115. The control information processing section 115 supplies the control information included in the control frame to the operation control section 107. On the basis of the control information, the operation control section 107 gives the role setting section 106 a notification as to whether or not the superordinate controller approves connection of the communication apparatus 11 as an access point.

In a case where the superordinate controller approves connection of the communication apparatus 11 as an access point, the role setting section 106 determines that the role can be changed to an access point, and the process proceeds to Step S58.

In Step S58, the communication apparatus 11 starts operation of an access point. Specifically, the role setting section 106 gives the network managing section 104 a notification that the role has been changed to an access point, and also gives the operation control section 23 the notification via the interface section 101. The operation control section 23 and the operation control section 107 start control of operation performed as an access point.

Although detailed explanations are omitted, thereafter, under the control of the operation control section 107 and the like, the communication apparatus 11 releases the connection with the access point in accordance with a predetermined communication protocol. The communication apparatus 11 is then directly connected to the superordinate controller, as an access point.

Thereafter, the communication terminal role control process ends.

On the other hand, in a case where, in Step S57, the superordinate controller is not within the communication coverage of the communication apparatus 11, or the superordinate controller does not approve connection of the communication apparatus 11 as an access point, the role setting section 106 determines that the role cannot be changed to an access point, and the communication terminal role control process ends.

In addition, for example, in a case where, in Step S56, there is an access point having a load which is lower than a predetermined lower limit value in the latest predetermined length of time within the communication coverage of the communication apparatus 11, the role setting section 106 determines that there is a nearby access point having a low load, and the process proceeds to Step S59.

In Step S59, the communication apparatus 11 changes an access point to be connected. Although detailed explanations are omitted, under the control of the operation control section 107 and the like, the communication apparatus 11 releases the connection with the superordinate access point in accordance with a predetermined communication protocol. The communication apparatus 11 is then connected to the access point having the low load detected in the process in Step S56.

Thereafter, the communication terminal role control process ends.

On the other hand, for example, in a case where, in Step S55, the load of the superordinate access point in the latest predetermined length of time is equal to or lower than the predetermined upper limit value, the role setting section 106 determines that the load of the superordinate access point is not high, and the communication terminal role control process ends.

<AP Role Control Process>

Next, details of the AP role control process in Step S6 in FIG. 4 are explained with reference to a flowchart in FIG. 9.

In Step S101, similarly to the process in Step S51 in FIG. 6, it is determined whether or not a failure in access to the external network has occurred. In a case where it is determined that no failure in access to the external network has occurred, the process proceeds to Step S102.

In Step S102, similarly to the process in Step S52 in FIG. 6, it is determined whether or not the load of a superordinate controller is high. In a case where it is determined that the load of the superordinate controller is high, the process proceeds to Step S103.

On the other hand, in a case where it is determined in Step S101 that a failure in access to the external network has occurred, the process in Step S102 is skipped, and the process proceeds to Step S103.

In Step S103, similarly to the process in Step S53 in FIG. 6, it is determined whether or not the role can be changed to a controller. In a case where it is determined that the role can be changed to a controller, the process proceeds to Step S104.

In Step S104, similarly to the process in Step S54 in FIG. 6, operation of a controller is started. That is, the communication apparatus 11 starts the operation of a controller and releases the connection with the controller. The communication apparatus 11 is then directly connected with the external network.

Thereafter, the AP role control process ends.

On the other hand, in a case where it is determined in Step S103 that the role cannot be changed to a controller, the process in Step S104 is skipped, and the AP role control process ends.

In addition, in a case where it is determined in Step S102 that the load of the superordinate controller is not high, the process proceeds to Step S105.

In Step S105, on the basis of information from the monitoring section 105, the role setting section 106 determines whether or not there has been no data transfer for a long period of time. For example, in a case where there have been no transmission and reception of a signal including data frames from a subordinate communication terminal connected to the communication apparatus 11 which is an access point, for a predetermined length of time or longer, the role setting section 106 determines that there has been no data transfer for a long period of time, and the process proceeds to Step S106. That is, in a case where the load of the communication apparatus 11 which is an access point is low, the process proceeds to Step S106.

In Step S106, similarly to the process in Step S56 in FIG. 6, it is determined whether or not there is a nearby access point having a low load. In a case where it is determined whether or not there is a nearby access point having a low load, the process proceeds to Step S107.

In Step S107, the role setting section 106 determines whether or not the role can be changed to a communication terminal. Specifically, the role setting section 106 instructs the operation control section 107 to change the role to a communication terminal.

The operation control section 107 instructs the control information generating section 108 to request the superordinate controller to release the communication apparatus 11 from the role of an access point. The control information generating section 108 generates Network Structure Connection Release Frame, and supplies it to the wireless transmission processing section 110. The wireless transmission processing section 110 transmits a transmission signal including Network Structure Connection Release Frame to the superordinate controller via the antenna control section 111 as well as the antenna element 112a and the antenna element 112b.

FIG. 10 depicts a configuration example of Network Structure Connection Release Frame. Network Structure Connection Release Frame is a control frame to be transmitted to a superordinate controller for requesting the superordinate controller to allow an access point to be released from the role of an access point and to operate as a communication terminal.

Network Structure Connection Release Frame includes Header and FCS similar to those in Network Structure Connection Request Frame in FIG. 5 that are arranged at the beginning and end of it, respectively. Note that an address of a source-of-transmission access point is set in Transmit Address in Header, and an address of a destination-of-transmission controller is set in Receive Address in Header.

Controller Identifier, New Access Point Identifier, Transfer Capacity, and Connection Parameter are arranged between Header and FCS.

Controller Identifier represents identification information of the superordinate controller.

New Access Point Identifier represents identification information of an access point with which a subordinate communication terminal can be connected. For example, identification information of the access point having the low load detected in the process in Step S106 is set.

Transfer Capacity represents information regarding the transfer capacity of an external network of the access point represented by New Access Point Identifier. The content of the information is similar to that of Transfer Capacity in Network Structure Announcement Frame in FIG. 5.

Connection Parameter represents a parameter for connection to the access point represented by New Access Point Identifier.

In relation to this, the controller determines whether or not to approve the release of the communication apparatus 11 from the role of an access point. For example, in a case where all subordinate communication terminals of the communication apparatus 11 can be connected to other access points, the controller approves the release. On the other hand, for example, in a case where at least one of the subordinate communication terminals of the communication apparatus 11 cannot be connected to another access point, the controller does not approve the release. The controller transmits a response signal including a control frame that includes control information representing approval or disapproval.

The wireless reception processing section 114 receives the response signal via the antenna element 112a and the antenna element 112b as well as the antenna control section 111, extracts the control frame from the response signal, and supplies the control frame to the control information processing section 115. The control information processing section 115 supplies the control information included in the control frame to the operation control section 107. On the basis of the control information, the operation control section 107 gives the role setting section 106 a notification as to whether or not the superordinate controller has approved the release of the communication apparatus 11 from the role of an access point.

In a case where the controller has approved the release of the communication apparatus 11 from the role of an access point, the role setting section 106 checks the presence of subordinate communication terminals on the basis of information from the network managing section 104. For example, in a case where there are no subordinate communication terminals for such a reason that subordinate communication terminals have changed their connection destinations to other access points, or for other reasons, the role setting section 106 determines that the role can be changed to a communication terminal, and the process proceeds to Step S108.

In Step S108, the communication apparatus 11 starts operation of a communication terminal. Specifically, the role setting section 106 gives the network managing section 104 a notification that the role has been changed to a communication terminal, and also gives the operation control section 23 the notification via the interface section 101. The operation control section 23 and the operation control section 107 start control of operation performed as a communication terminal.

Although detailed explanations are omitted, thereafter, under the control of the operation control section 107 and the like, the communication apparatus 11 releases the connection with the controller in accordance with a predetermined communication protocol. The communication apparatus 11 is then connected, as a communication terminal, to the access point having the low load detected in the process in Step S56.

Thereafter, the AP role control process ends.

On the other hand, in a case where, in Step S107, the controller has not approved the release of the communication apparatus 11 from the role of an access point, or there is a subordinate communication terminal, the role setting section 106 determines that the role cannot be changed to a communication terminal, the process in Step S108 is skipped, and the AP role control process ends.

In addition, in a case where it is determined in Step S106 that there are no nearby access points having low loads, the processes in Step S107 and Step S108 are skipped, and the AP role control process ends.

Furthermore, for example, in a case where, in Step S105, there have been transmission and reception of a signal including data frames from a subordinate communication terminal in the latest predetermined length of time, the role setting section 106 determines that there has been data transfer, the processes in Step S106 to Step S108 are skipped, and the AP role control process ends.

### <Controller Role Control Process>

Next, details of the controller role control process in Step S7 in FIG. 4 are explained with reference to a flowchart in FIG. 11.

In Step S151, on the basis of information from the monitoring section 105, the role setting section 106 determines whether or not access to the external network is absent. For example, in a case where access to the external network from a subordinate access point connected to the communication apparatus 11 which is a controller is absent for a predetermined length of time or longer, the role setting section 106 determines that access to the external network is absent, and the process proceeds to Step S152.

In Step S152, on the basis of information from the monitoring section 105, the role setting section 106 determines whether or not there is a nearby controller having a low load. For example, in a case where there is a controller having a load which is lower than a predetermined lower limit value in the latest predetermined length of time within the communication coverage of the communication apparatus 11, the role setting section 106 determines that there is a nearby controller having a low load, and the process proceeds to Step S153. Note that a content and a lower limit value of the load to be used as a determination criterion can be set as desired.

In Step S153, similarly to the process in Step S56 in FIG. 6, it is determined whether or not there is a nearby access point having a low load. In a case where it is determined that there is a nearby access point having a low load, the process proceeds to Step S154. For example, in a case where the load of the whole internal network has lowered and there are a controller and an access point having low loads nearby, the process proceeds to Step S154.

In Step S154, the role setting section 106 determines whether or not the role can be changed to a communication terminal. Specifically, the role setting section 106 instructs the operation control section 107 to change the role to a communication terminal.

The operation control section 107 instructs the control information generating section 108 to request the controller (hereinafter, referred to as a substitute controller) having the low load detected in the process in Step S152 to release the communication apparatus 11 from the role of a controller. The control information generating section 108 generates Network Structure Independent Release Frame, and supplies it to the wireless transmission processing section 110. The wireless transmission processing section 110 transmits a transmission signal including Network Structure Independent Release Frame to the substitute controller via the antenna control section 111 as well as the antenna element 112a and the antenna element 112b.

FIG. 12 depicts a configuration example of Network Structure Independent Release Frame. Network Structure Independent Release Frame is a control frame to be transmitted by a controller to a nearby substitute controller for requesting the nearby substitute controller to allow the controller to be released from the role of a controller and to operate as an access point or a communication terminal.

Network Structure Independent Release Frame includes Header and FCS similar to those in Network Structure Connection Request Frame in FIG. 5 that are arranged at the beginning and end of it, respectively. Note that an address of a source-of-transmission controller is set in Transmit Address in Header, and an address of a destination-of-transmission substitute controller is set in Receive Address in Header.

Controller Identifier, New Controller Identifier, Transfer Capacity, and Connection Parameter are arranged between Header and FCS.

Controller Identifier represents identification information of itself (the controller).

New Controller Identifier represents identification information of the substitute controller.

Transfer Capacity represents information regarding the transfer capacity of the external network of the substitute controller. The content of the information is similar to that of Transfer Capacity in Network Structure Announcement Frame in FIG. 5.

Connection Parameter represents a parameter for connection to the substitute controller.

In relation to this, the substitute controller determines whether or not to approve the release of the communication apparatus 11 from the role of a controller. For example, in a case where a subordinate access point of the communication apparatus 11 can be connected to the substitute controller, the substitute controller approves the release of the communication apparatus 11 from the role of a controller. On the other hand, in a case where a subordinate access point of the communication apparatus 11 cannot be connected to the substitute controller, the substitute controller does not approve the release of the communication apparatus 11 from the role of a controller. The substitute controller transmits a response signal including a control frame that includes control information representing approval or disapproval.

The wireless reception processing section 114 receives the response signal via the antenna element 112a and the antenna element 112b as well as the antenna control section 111, extracts the control frame from the response signal, and supplies the control frame to the control information processing section 115. The control information processing section 115 supplies the control information included in the control frame to the operation control section 107. On the basis of the control information, the operation control section 107 gives the role setting section 106 a notification as to whether or not the substitute controller has approved the release of the communication apparatus 11 from the role of a controller.

In a case where the substitute controller has approved the release of the communication apparatus 11 from the role of a controller, the role setting section 106 checks the presence of a subordinate access point on the basis of information from the network managing section 104. For example, in a case where there are no subordinate access points for such a reason that subordinate access points have changed their connection destinations to the substitute controller, or for other reasons, the role setting section 106 determines that the role can be changed to a communication terminal, and the process proceeds to Step S155.

In Step S155, the communication apparatus 11 starts operation of a communication terminal. Specifically, the role setting section 106 gives the network managing section 104 a notification that the role has been changed to a communication terminal, and also gives the operation control section 23 the notification via the interface section 101. The operation control section 23 and the operation control section 107 start control of operation performed as a communication terminal.

Then, although detailed explanations are omitted, under the control of the operation control section 107 and the like, the communication apparatus 11 releases the connection with the external network in accordance with a predetermined communication protocol. The communication apparatus 11 is then connected, as a communication terminal, to the access point having the low load detected in the process in Step S153.

Thereafter, the controller role control process ends.

On the other hand, in a case where, in Step S154, the substitute controller has not approved the release of the communication apparatus 11 from the role of a controller, or there is a subordinate access point, the role setting section 106 determines that the role cannot be changed to a communication terminal, and the process proceeds to Step S158.

In addition, in a case where it is determined in Step S153 that there are no nearby access points having low loads, the process proceeds to Step S158.

Further, in a case where it is determined in Step S152 that there are no nearby controllers having low loads, the processes in Step S152 to Step S155 are skipped, and the controller role control process ends.

In addition, for example, in a case where, in Step S151, there has been access from a subordinate access point to the external network in the latest predetermined length of time, the role setting section 106 determines that there is access to the external network, and the process proceeds to Step S156.

In Step S156, on the basis of information from the monitoring section 105, the role setting section 106 determines whether or not there is less access to the external network. For example, in a case where the amount of access from a subordinate access point to the external network in the latest predetermined length of time is smaller than a predetermined lower limit value, the role setting section 106 determines that there is less access to the external network, and the process proceeds to Step S157. Note that a content and a lower limit value of the load to be used as a determination criterion can be set as desired.

In Step S157, similarly to the process in Step S152, it is determined whether or not there is a nearby controller having a low load. In a case where it is determined that there is a nearby controller (substitute controller) having a low load, the process proceeds to Step S158.

In Step S158, the role setting section 106 determines whether or not the role can be changed to an access point. Specifically, similarly to the process in Step S152, a transmission signal including Network Structure Independent Request Frame is transmitted from the communication apparatus 11 to the substitute controller.

In response to this, the substitute controller determines whether or not to approve the release of the communication apparatus 11 from the role of a controller. For example, in a case where the communication apparatus 11 and subordinate access points of the communication apparatus 11 can be connected to the substitute controller, the substitute controller approves the release of the communication apparatus 11 from the role of a controller. On the other hand, in a case where at least one of the communication apparatus 11 and the subordinate access points of the communication apparatus 11 cannot be connected to the substitute controller, the substitute controller does not approve the release of the communication apparatus 11 from the role of a controller. The substitute controller transmits a response signal including a control frame that includes control information representing approval or disapproval.

The wireless reception processing section 114 receives the response signal via the antenna element 112a and the antenna element 112b as well as the antenna control section 111, extracts the control frame from the response signal, and supplies the control frame to the control information processing section 115. The control information processing section 115 supplies the control information included in the control frame to the operation control section 107. On the basis of the control information, the operation control section 107 gives the role setting section 106 a notification as to whether or not the substitute controller approves the release of the communication apparatus 11 from the role of a controller.

In a case where the substitute controller approves the release of the communication apparatus 11 from the role of a controller, the role setting section 106 checks the presence of a subordinate access point on the basis of information from the network managing section 104. For example, in a case where there are no subordinate access points for such a reason that subordinate access points have changed their connection destinations to the substitute controller, or for other reasons, the role setting section 106 determines that the role can be changed to an access point, and the process proceeds to Step S159.

In Step S159, the communication apparatus 11 starts operation of an access point. Specifically, the role setting section 106 gives the network managing section 104 a notification that the role has been changed to an access point, and also gives the operation control section 23 the notification via the interface section 101. The operation control section 23 and the operation control section 107 start control of operation performed as an access point.

Then, although detailed explanations are omitted, under the control of the operation control section 107 and the like, the communication apparatus 11 releases the connection with the external network in accordance with a predetermined communication protocol. The communication apparatus 11 is then connected, as an access point, to the substitute controller.

Thereafter, the controller role control process ends.

On the other hand, in a case where, in Step S158, the substitute controller has not approved the release from the role of a controller, or there is a subordinate access point, the role setting section 106 determines that the role cannot be changed to an access point, the process in Step S159 is skipped, and the controller role control process ends.

In addition, in a case where it is determined in Step S157 that there are no nearby controllers having low loads, the processes in Step S158 and Step S159 are skipped, and the controller role control process ends.

Furthermore, for example, in a case where, in Step S156, the amount of access from a subordinate access point to the external network in the latest predetermined length of time is equal to or larger than a predetermined lower limit value, the role setting section 106 determines that there is no less access to the external network, the processes in Step S157 to Step S159 are skipped, and the controller role control process ends.

### <User Setting Role Control Process>

Next, the user setting role control process in Step S8 in FIG. 4 is explained with reference to a flowchart in FIG. 13.

In Step S201, the role setting section 106 determines whether or not changing the role to a communication terminal has been instructed.

FIG. 14 to FIG. 16 depict examples of an operation screen to be displayed on a touch panel display 311 included in the information input module 22 and the information output module 24 in a case where the communication apparatus 11 includes a smartphone 301. FIG. 14 depicts an example of a case where the smartphone 301 is operating as a communication terminal. FIG. 15 depicts an example of a case where the smartphone 301 is operating as an access point. FIG. 16 depicts an example of a case where the smartphone 301 is operating as a controller.

The touch panel display 311 in FIG. 14 displays network information 321 and buttons 322 to 324.

The network information 321 represents the configuration of a principal network to which the smartphone 301 belongs in a case where the smartphone 301 is operating as a communication terminal. Specifically, the hierarchical structure of the principal network is schematically represented as topology information of a controller, access points, and communication terminals. The position of the smartphone 301 in the principal network is represented by a gray circle.

The button 322 represents that it is possible to cause the smartphone 301 to operate as a controller. As such, in a case where the smartphone 301 is to be caused to operate as a controller, the button 322 is pressed.

The button 323 represents that it is possible to cause the smartphone 301 to operate as an access point. As such, in a case where the smartphone 301 is to be caused to operate as an access point, the button 323 is pressed.

The button 324 represents that the smartphone 301 is operating as a communication terminal.

The touch panel display 311 in FIG. 15 displays network information 331 and buttons 332 to 334.

The network information 331 represents the configuration of a principal network to which the smartphone 301 belongs in a case where the smartphone 301 is operating as an access point. Specifically, the hierarchical structure of the principal network is schematically represented as topology information of a controller, access points, and communication terminals. The position of the smartphone 301 in the principal network is represented by a gray circle.

The button 332 represents that it is possible to cause the smartphone 301 to operate as a controller. As such, in a case where the smartphone 301 is to be caused to operate as a controller, the button 332 is pressed.

The button 333 represents that the smartphone 301 is operating as an access point.

The button 334 represents that it is possible to cause the smartphone 301 to operate as a communication terminal. As such, in a case where the smartphone 301 is to be caused to operate as a communication terminal, the button 334 is pressed.

The touch panel display 311 in FIG. 16 displays network information 341 and buttons 342 to 344.

The network information 341 represents the configuration of a principal network to which the smartphone 301 belongs and a peripheral network in a case where the smartphone 301 is operating as a controller. Specifically, the hierarchical structures of the principal network and the peripheral network are schematically represented as topology information of controllers, access points, and communication terminals. The position of the smartphone 301 in the principal network is represented by a gray triangle.

The button 332 represents that the smartphone 301 is operating as a controller.

The button 343 represents that it is possible to cause the smartphone 301 to operate as an access point. As such, in a case where the smartphone 301 is to be caused to operate as an access point, the button 343 is pressed.

The button 344 represents that it is possible to cause the smartphone 301 to operate as a communication terminal. As such, in a case where the smartphone 301 is to be caused to operate as a communication terminal, the button 344 is pressed.

Note that, for example, costs related to a connection of the external network, a remaining capacity available for the connection of the external network, and the like may be displayed as factors for decision making by a user.

For example, in a case where the user intends to change the role of the communication apparatus 11 to a communication terminal, the user presses the button 334 on the operation screen in FIG. 15, or the button 344 on the operation screen in FIG. 16.

In response to this, the information input module 22 supplies input data corresponding to the user instruction to the role setting section 106 via the operation control section 23 and the interface section 101. Then, the role setting section 106 determines that changing the role to a communication terminal has been instructed, and the process proceeds to Step S202.

In Step S202, similarly to the process in Step S107 in FIG. 9 or Step S154 in FIG. 11, it is determined whether or not the role can be changed to a communication terminal. In a case where it is determined that the role can be changed to a communication terminal, the process proceeds to Step S203.

In Step S203, similarly to the process in Step S108 in FIG. 9 or Step S155 in FIG. 11, operation of a communication terminal is started.

Thereafter, the user setting role control process ends.

On the other hand, in a case where it is determined in Step S202 that the role cannot be changed to a communication terminal, the process in Step S203 is skipped, and the user setting role control process ends.

In addition, in a case where it is determined in Step S201 that changing the role to a communication terminal has not been instructed, the process proceeds to Step S204.

In Step S204, the role setting section 106 determines whether or not changing the role to an access point has been instructed.

For example, in a case where the user intends to change the role of the communication apparatus 11 to an access point, the user presses the button 323 on the operation screen in FIG. 14, or the button 343 on the operation screen in FIG. 16.

In response to this, the information input module 22 supplies input data corresponding to the user instruction to the role setting section 106 via the operation control section 23 and the interface section 101. Then, the role setting section 106 determines that changing the role to an access point has been instructed, and the process proceeds to Step S205.

In Step S205, similarly to the process in Step S57 in FIG. 6 or Step S158 in FIG. 11, it is determined whether or not the role can be changed to an access point. In a case where it is determined that the role can be changed to an access point, the process proceeds to Step S206.

In Step S206, similarly to the process in Step S58 in FIG. 6 or Step S159 in FIG. 11, operation of an access point is started.

Thereafter, the user setting role control process ends.

On the other hand, in a case where it is determined in Step S205 that the role cannot be changed to an access point, the process in Step S206 is skipped, and the user setting role control process ends.

In addition, in a case where it is determined in Step S204 that changing the role to an access point has not been instructed, the process proceeds to Step S207.

In Step S207, the role setting section 106 determines whether or not changing the role to a controller has been instructed.

For example, in a case where the user intends to change the role of the communication apparatus 11 to a controller, the user presses the button 322 on the operation screen in FIG. 14, or the button 332 on the operation screen in FIG. 15.

In response to this, the information input module 22 supplies input data corresponding to the user instruction to the role setting section 106 via the operation control section 23 and the interface section 101. Then, the role setting section 106 determines that changing the role to a controller has been instructed, and the process proceeds to Step S208.

In Step S208, similarly to the process in Step S53 in FIG. 6 or Step S103 in FIG. 9, it is determined whether or not the role can be changed to a controller. In a case where it is determined that the role can be changed to a controller, the process proceeds to Step S209.

In Step S209, similarly to the process in Step S54 in FIG. 6 or Step S104 in FIG. 9, operation of a controller is started.

Thereafter, the user setting role control process ends.

On the other hand, in a case where it is determined in Step S208 that the role cannot be changed to a controller, the process in Step S209 is skipped, and the user setting role control process ends.

In addition, in a case where it is determined in Step S207 that changing the role to a controller has not been instructed, the processes in Step S208 and Step S209 are skipped, and the user setting role control process ends.

In the manner described above, on the basis of the status of the internal networks and the status of access between the internal networks and the external network, it is possible to cause the communication apparatus 11 to operate in an appropriate role on an appropriate layer. As a result, the flexibility of the internal networks is enhanced. For example, it is possible to flexibly change the configuration of the internal networks according to the status, and to use the internal networks efficiently. In addition, for example, it is possible to make access to the external network favorable, improve the communication speed, and reduce communication costs.

FIG. 17 depicts a state transition diagram corresponding to the communication control process described above.

For example, in a case where the communication apparatus 11 is operating as a communication terminal, the role is changed to an access point when the load of a superordinate access point has increased. As a result, the load of the access point is offloaded and thus, for example, communication speeds in the internal networks and access from the internal networks to the external network become favorable. In addition, the communication apparatus 11 accesses the external network bypassing access points, and thus, access from the communication apparatus 11 to the external network also becomes favorable.

In addition, in a case where the communication apparatus 11 is operating as a communication terminal or an access point, the role is changed to a controller when the load of a superordinate controller has increased. As a result, the load of the controller is offloaded, and thus, for example, communication speeds in the internal networks and access from the internal networks to the external network become favorable. In addition, the communication apparatus 11 accesses the external network bypassing controllers and access points, and thus, access from the communication apparatus 11 to the external network also becomes favorable.

Further, in a case where the communication apparatus 11 is operating as a communication terminal or an access point, the role is changed to a controller when any failure in access to the external network has occurred. As a result, for example, a failure in access from the internal networks to the external network is overcome.

In the manner described above, along with an increase of the load of a communication network, the role of the communication apparatus 11 is set to a role on a layer higher than the current layer. That is, the layer of the communication apparatus 11 is made higher.

In addition, for example, when access to the external network has decreased (i.e., the load has decreased) and the load of a nearby controller has decreased in a case where the communication apparatus 11 is operating as a controller, the role of the communication apparatus 11 is changed to an access point if there are no subordinate access points (if no access points are connected to the communication apparatus 11). Further, when there is no access to the external network, and the load of the whole network has decreased in a case where the communication apparatus 11 is operating as a controller, the role of the communication apparatus 11 is changed to a communication terminal if there are no subordinate access points (if no access points are connected to the communication apparatus 11). In addition, when there has been no data transfer for a long period of time and the load of a nearby access point has decreased in a case where the communication apparatus 11 is operating as an access point, the role of the communication apparatus 11 is changed to a communication terminal if there are no subordinate communication terminals (if no communication terminals are connected to the communication apparatus 11).

As described above, along with a decrease of the load of a communication network, the role of the communication apparatus 11 is set to a role on a layer lower than the current layer. That is, the layer of the communication apparatus 11 is made lower.

Here, as the layer becomes higher, the number of subordinate communication terminals and access points increases, and the transfer amount of the communication apparatus 11 and the amount of calculation and power consumption related to routing and the like of the communication apparatus 11 increase. In response to this, by making the layer on which the communication apparatus 11 operates lower along with a decrease of access to the external network, the loads of the internal networks, or the like, it is possible to reduce the transfer amount, the amount of calculation, and the power consumption. As a result, for example, it is possible to keep the communication cost and communication capacity of the communication apparatus 11 low. In addition, for example, it becomes possible to cause such communication equipment as a battery-driven smartphone to operate as a controller by using a public communication line or the like as necessary, and it is also possible to make the battery life longer.

### <Example of Operation Sequence of Communication Apparatus 11>

Here, an example of an operation sequence of the communication apparatus 11 is explained with reference to FIG. 18 to FIG. 28.

For example, as depicted in FIG. 18, a controller CNTL1 and an access point AP1 perform an information exchange process. In an information exchange process, for example, an exchange of information representing the connection configuration of a network and the like are performed. In addition, information exchange processes are performed between the access point AP1 and a communication terminal STA1, between the controller CNTL1 and an access point AP2, and between the access point AP2 and a communication terminal STA2.

Here, when the power supply of the communication apparatus 11 is turned on, for example, as a communication terminal STA3, the communication apparatus 11 performs an information exchange process with the access point AP1.

As a result, a communication network 1 in FIG. 19 is constructed. The abovementioned communication network 1 is the same as the communication network 1 in FIG. 1.

It is assumed that, thereafter, as the amount of transfer between the access point AP1 and the communication terminal STA1 increases, the load of the access point AP1 increases, and it becomes impossible to allocate sufficient communication resources of the communication terminal STA1 and the communication terminal STA3.

In response to this, for example, on the basis of results of monitoring of the transfer amounts of the controller CNTL1, the access point AP1, and the access point AP2, the communication terminal STA3 performs a process of making a determination regarding a change of the connection destination. As a result, the communication terminal STA3 decides to change the connection destination to the access point AP2 having a lower load, for example.

Thereafter, the communication terminal STA3 transmits an association request to the access point AP2. In a case where the access point AP2 accepts the association of the communication terminal STA3, the access point AP2 notifies the controller CNTL1 of a switch of the association destination of the communication terminal STA3.

Then, the controller CNTL1 and the access point AP2 perform an information exchange process, and the access point AP2 and the communication terminal STA3 perform an information exchange process.

As a result, as depicted in FIG. 20, the connection destination of the communication terminal STA3 is changed from the access point AP1 to the access point AP2. As a result, sufficient communication resources of the communication terminal STA1 and the communication terminal STA3 are allocated, and, for example, access to the external network 2 becomes favorable.

It is assumed that, thereafter, for example, as depicted in FIG. 21, as the amount of transfer between the access point AP2 and the communication terminal STA2 increases, the load of the access point AP2 increases, and it becomes impossible to allocate sufficient communication resources available to the communication terminal STA2 and the communication terminal STA3.

In response to this, for example, on the basis of results of monitoring of the transfer amounts of the controller CNTL1, the access point AP1, and the access point AP2, the communication terminal STA3 performs a process of making a determination regarding a change of the role. As a result, for example, because the loads of the access point AP1 and the access point AP2 are both high, the communication terminal STA3 decides to change the role to an access point.

Then, the communication terminal STA3 transmits connection request communication to the controller CNTL1. That is, the communication terminal STA3 transmits a transmission signal including Network Structure Connection Request Frame in FIG. 8 to the controller CNTL1.

In a case where the controller CNTL1 approves the connection request of the communication terminal STA3, the controller CNTL1 transmits a response signal representing the approval of the connection request to the communication terminal STA3. Then, the controller CNTL1 and the communication terminal STA3 perform an information exchange process.

Thereafter, information exchange processes are performed between the controller CNTL1 and the access point AP1, between the access point AP1 and the communication terminal STA1, between the controller CNTL1 and the access point AP2, and between the access point AP2 and the communication terminal STA2.

As a result, as depicted in FIG. 22, as an access point AP3, the communication apparatus 11 is directly connected with the controller CNTL1, and starts data transfer between itself and the controller CNTL1. Consequently, sufficient communication resources of the communication terminal STA2 and the access point AP3 (the former communication terminal STA3) are allocated, and, for example, access to the external network 2 becomes favorable.

Note that, for example, under the control the operation control section 107 and the like, the communication apparatus 11 which is the access point AP3 may give an instruction to the communication terminal STA1 or the communication terminal STA2 according to the load of the access point AP1 or the access point AP2, and cause the connection destination to be changed from the access point AP1 or the access point AP2 to the communication apparatus 11 (a controller CNTL2).

It is assumed that, thereafter, for example, as depicted in FIG. 23, as the amount of transfer between the access point AP2 and the communication terminal STA2 further increases, the load of the controller CNTL1 increases, and it becomes impossible to allocate sufficient communication resources of the communication terminal STA1, the communication terminal STA2, and the access point AP3.

In response to this, for example, on the basis of results of monitoring of the transfer amounts of the controller CNTL1, the access point AP1, and the access point AP2, the access point AP3 performs a process of making a determination regarding a change of the role. As a result, for example, because the load of the controller CNTL1 is very high, the access point AP3 decides to change the role to a controller.

Then, the access point AP3 transmits an independence request notification to the controller CNTL1. That is, the access point AP3 transmits a transmission signal including Network Structure Independent Request Frame in FIG. 7 to the controller CNTL1.

In a case where the controller CNTL1 approves the independence request of the access point AP3, the controller CNTL1 transmits a response signal representing the approval of the independence request to the access point AP3. Then, the controller CNTL1 and the access point AP3 perform an information exchange process.

Thereafter, information exchange processes are performed between the controller CNTL1 and the access point AP1, between the access point AP1 and the communication terminal STA1, between the access point AP3 and the access point AP2, and between the access point AP2 and the communication terminal STA2.

As a result, as depicted in FIG. 24, as the controller CNTL2, the communication apparatus 11 is directly connected with the external network 2. In addition, the access point AP2 is connected to the controller CNTL2, and the communication terminal STA2 is connected to the controller CNTL2 via the access point AP2.

Note that, for example, under the control the operation control section 107 and the like, the communication apparatus 11 which is the controller CNTL2 may give an instruction to the access point AP2, and cause the connection destination to be changed from the controller CNTL1 to the communication apparatus 11 (controller CNTL2).

As a result, the internal network is separated into a communication network 1A and a communication network 1B. The communication network 1A includes the controller CNTL1, the access point AP1 and the communication terminal STA1. The communication network 1B includes the controller CNTL2, the access point AP2, and the communication terminal STA2. Consequently, the load of the controller CNTL1 is offloaded onto the controller CNTL2, sufficient communication resources of the communication terminal STA1, the communication terminal STA2, and the controller CNTL2 (the former access point AP3) are allocated, and, for example, access to the external network becomes favorable.

It is assumed that, thereafter, for example, as depicted in FIG. 25, the amount of transfer between the access point AP2 and the communication terminal STA2 decreases, and thus, the load of the controller CNTL2 decreases.

In response to this, for example, on the basis of results of monitoring of the transfer amounts of the controller CNTL1, the access point AP1, and the access point AP2, the controller CNTL2 performs a process of making a determination regarding a change of the role. As a result, for example, because the load of the controller CNTL1 is not so high, the controller CNTL2 decides to change the role to an access point.

Then, the controller CNTL2 transmits an independence release request to the controller CNTL1. That is, the controller CNTL2 transmits a transmission signal including Network Structure Independent Release Frame in FIG. 12 to the controller CNTL1.

In a case where the controller CNTL1 approves the independence release of the controller CNTL2, the controller CNTL1 transmits a response signal representing the approval of the independence release to the controller CNTL2. Then, the controller CNTL1 and the controller CNTL2 perform an information exchange process.

Thereafter, information exchange processes are performed between the controller CNTL1 and the access point AP1, between the access point AP1 and the communication terminal STA1, between the controller CNTL1 and the access point AP2, and between the access point AP2 and the communication terminal STA2.

As a result, as depicted in FIG. 26, as the access point AP3, the communication apparatus 11 is connected to the controller CNTL1. Consequently, the load and power consumption of the access point AP3 (the former controller CNTL2) are reduced.

It is assumed that, thereafter, for example, as depicted in FIG. 27, the amount of transfer between the access point AP2 and the communication terminal STA2 further decreases, and thus, the load of the access point AP2 decreases. In addition, it is assumed that the load of the access point AP3 also decreases.

In response to this, for example, on the basis of results of monitoring of the transfer amounts of the controller CNTL1, the access point AP1, and the access point AP2, the access point AP3 performs a process of making a determination regarding a change of the role. As a result, for example, because the loads of the controller CNTL1 and the access point AP2 are not so high, the access point AP3 decides to change the role to an access point.

Then, the access point AP3 transmits an operation release request to the controller CNTL1. That is, the controller CNTL2 transmits a transmission signal including Network Structure Connection Release Frame in FIG. 10 to the controller CNTL1.

In a case where the controller CNTL1 approves the operation release of the access point AP3, the controller CNTL1 transmits a response signal representing the approval of the operation release to the access point AP3.

Thereafter, information exchange processes are performed between the controller CNTL1 and the access point AP1, between the access point AP1 and the communication terminal STA1, between the controller CNTL1 and the access point AP2, between the access point AP3 and the access point AP2, and between the access point AP2 and the communication terminal STA2.

As a result, as depicted in FIG. 28, as the communication terminal STA3, the communication apparatus 11 is connected to the access point AP2. As a result, the load and power consumption of the communication terminal STA3 (the former access point AP3) are reduced.

### <<2. Modification Examples>>

Hereinafter, modification examples of the embodiments according to the present technology described above are explained.

Although, in the examples depicted in the explanation above, the communication apparatus 11 changes the role of itself on the basis of results of monitoring of a communication status, for example, a controller or an access point near the communication apparatus 11 may change the role of the communication apparatus 11 on the basis of results of monitoring of a communication status.

For example, in a case where the load of a superordinate controller of the communication apparatus 11 is high, the controller may instruct the communication apparatus 11 which is a subordinate access point or communication terminal to change the role of the communication apparatus 11 to a controller. For example, in a case where the load of a subordinate access point of a superordinate controller of the communication apparatus 11 is high, the superordinate controller may instruct the communication apparatus 11 which is a subordinate communication terminal to change the role of the communication apparatus 11 to an access point. For example, in a case where the load of a superordinate access point of the communication apparatus 11 is high, the superordinate access point may instruct the communication apparatus 11 which is a subordinate communication terminal to change the role of the communication apparatus 11 to an access point.

In addition, conditions under which the role of the communication apparatus 11 is changed as described above are examples, and can be changed.

Further, the configuration example of the communication apparatus 11 is an example, and can be changed. For example, the sharing of the functions of the operation control section 23 and the wireless communication module 25 can be changed. For example, some of the functions of the wireless communication module 25 (e.g., the monitoring section 105, the role setting section 106, or the operation control section 107) may be provided in the operation control section 23. In addition, for example, some of the functions of the operation control section 23 may be provided in the wireless communication module 25.

Furthermore, the method for wireless communication of the wireless communication module 25 is not particularly limited to any kind. For example, wireless communication conforming to the standard of IEEE 802.11 and the like can be applied to the method.

In addition, for example, a communication terminal may be connected to a controller via plural access points.

<<3. Others>>

### <Configuration Example of Computer>

The series of processing described above can be executed by hardware or can be executed by software. In a case where the series of processing is executed by software, a program included in the software is installed on computers. Here, the computers include computers incorporated in dedicated hardware, general-purpose personal computers, for example, that can execute various types of functions by having various types of programs installed thereon, and the like.

FIG. 29 is a block diagram depicting a configuration example of the hardware of a computer that executes the abovementioned series of processing in accordance with a program.

In a computer 1000, a CPU (Central Processing Unit) 1001, a ROM (Read Only Memory) 1002, and a RAM (Random Access Memory) 1003 are interconnected by a bus 1004.

The bus 1004 is further connected with an input/output interface 1005. The input/output interface 1005 is connected with an input section 1006, an output section 1007, a recording section 1008, a communication section 1009, and a drive 1010.

The input section 1006 includes an input switch, a button, a microphone, an image-capturing element, and the like. The output section 1007 includes a display, a speaker, and the like. The recording section 1008 includes a hard disk, a non-volatile memory, and the like. The communication section 1009 includes a network interface and the like. The drive 1010 drives a removable medium 1011 such as a magnetic disc, an optical disc, a magneto-optical disc, or a semiconductor memory.

In the thus-configured computer 1000, for example, the CPU 1001 loads a program recorded in the recording section 1008 onto the RAM 1003 via the input/output interface 1005 and the bus 1004, and executes the program to thereby perform the series of processing described above.

The program to be executed by the computer 1000 (the CPU 1001) can be provided by being recorded on the removable medium 1011 as a package medium or the like, for example. In addition, the program can be provided via a cable transfer medium or a wireless transfer medium such as a local area network, the Internet, or digital satellite broadcasting.

In the computer 1000, by attaching the removable medium 1011 to the drive 1010, the program can be installed on the recording section 1008 via the input/output interface 1005. In addition, the program can be received by the communication section 1009 via a cable transfer medium or a wireless transfer medium, and installed on the recording section 1008. Other than them, the program can be installed in advance on the ROM 1002 or the recording section 1008.

Note that the program to be executed by the computer may be a program whose processes are performed in a temporal sequence along the orders explained in the present specification or may be a program whose processes are performed in parallel, or at necessary timings such as timings when those processes are called.

In addition, in the present specification, a system means a set of plural constituent elements (apparatuses, modules (components), etc.), and it does not matter whether or not all the constituent elements are located in a single housing. Accordingly, plural apparatuses housed in separate housings and connected via a network and one apparatus with one housing having housed therein plural modules are both systems.

Further, embodiments of the present technology are not limited to the embodiments mentioned above, and can be changed in various manners within the scope not deviating from the gist of the present technology.

For example, the present technology can have a configuration of cloud computing in which one function is shared among plural apparatuses via a network and is processed in cooperation with each other.

In addition, other than being executed on one apparatus, each step explained in a flowchart mentioned above can be shared by plural apparatuses and executed thereon.

Furthermore, in a case where one step includes plural processes, other than being executed on one apparatus, the plural processes included in the one step can be shared among plural apparatuses and executed thereon.

### <Combination Examples of Configurations>

The present technology can also have such configurations as the ones below.

(1) A communication apparatus including:
   a monitoring section that monitors a status of a communication network having a hierarchical structure;
   a role setting section that sets a role in the hierarchical structure on the basis of the status of the communication network; and
   an operation control section that controls execution of operation of the role that has been changed.
(2) The communication apparatus according to (1), in which the role setting section sets the role from any of a communication terminal, a controller connected to an external network that is an external communication network of the communication network, and an access point that relays communication between a controller and a communication terminal.
(3) The communication apparatus according to (2), in which, in a case where the role is a communication terminal, the role setting section changes the role to an access point on the basis of a load of a superordinate access point of the communication apparatus.
(4) The communication apparatus according to (2) or (3), in which, in a case where the role is a communication terminal or an access point, the role setting section changes the role to a controller on the basis of a load of a superordinate controller of the communication apparatus.
(5) The communication apparatus according to (4), in which, in a case where the communication terminal is able to be connected to the external network, the operation control section changes the role to a controller.
(6) The communication apparatus according to (4) or (5), in which, in a case where the role is changed to a controller, the operation control section causes at least some of subordinate access points of the superordinate controller to be connected to the communication apparatus.
(7) The communication apparatus according to any one of (2) to (6), in which, in a case where the role is an access point, the role setting section changes the role to a communication terminal on the basis of a load of the communication apparatus.
(8) The communication apparatus according to (7), in which, in a case where there has been no data transfer for a predetermined length of time or longer, the role setting section changes the role to a communication terminal.
(9) The communication apparatus according to (7) or (8), in which,
   in a case where there is an access point having a low load near the communication apparatus, the role setting section changes the role to a communication terminal, and
   the operation control section causes the communication apparatus to be connected to the access point having the low load.
(10) The communication apparatus according to any one of (2) to (9), in which, in a case where the role is a controller, the role setting section changes the role to an access point or a communication terminal on the basis of a status of access to the external network.
(11) The communication apparatus according to (10), in which, in a case where access to the external network is absent for a predetermined length of time or longer, the role setting section changes the role to a communication terminal.
(12) The communication apparatus according to (10) or (11), in which,
   in a case where there is a controller having a low load near the communication apparatus, the role setting section changes the role to an access point, and
   the operation control section causes the communication apparatus to be connected to the controller having the low load.
(13) The communication apparatus according to any one of (10) to (12), in which,
   in a case where there are a controller having a low load and an access point having a low load near the communication apparatus, the role setting section changes the role to a communication terminal, and
   the operation control section causes the communication apparatus to be connected to the access point having the low load.
(14) The communication apparatus according to any one of (2) to (13), in which, when a failure in access to the external network has occurred in a case where the role is a communication terminal or an access point, the role setting section changes the role to a controller.
(15) The communication apparatus according to any one of (1) to (14), in which the role setting section changes the role to a role on a layer higher than a current layer, along with an increase of a load of the communication network.
(16) The communication apparatus according to any one of (1) to (15), in which the role setting section changes the role to a role on a layer lower than a current layer, along with a decrease of the load of the communication network.
(17) The communication apparatus according to any one of (1) to (16), in which the role setting section further changes the role according to user operation.
(18) The communication apparatus according to any one of (1) to (17), in which the monitoring section monitors at least one of a load of each apparatus included in the communication network and a status of communication between the apparatuses.
(19) The communication apparatus according to any one of (1) to (18), in which the monitoring section monitors a status of access from the communication network to an external communication network.
(20) A communication control method performed by a communication apparatus, the communication control method including:
   monitoring a status of a communication network having a hierarchical structure;
   setting a role in the hierarchical structure on the basis of the status of the communication network; and
   controlling execution of operation of the role that has been changed.

Note that advantages described in the present specification are described not for limitation, but merely for illustrative purposes, and there may be other advantages.

### [Reference Signs List]

- 1:: Communication network
- 2:: External network
- 11:: Communication apparatus
- 21:: External network connection module
- 23:: Operation control section
- 25:: Wireless communication module
- 104:: Network managing section
- 105:: Monitoring section
- 106:: Role setting section
- 107:: Operation control section
- 152:: Control section

## Claims

1. A communication apparatus comprising:
a monitoring section that monitors a status of a communication network having a hierarchical structure;
a role setting section that sets a role in the hierarchical structure on a basis of the status of the communication network; and
an operation control section that controls execution of operation of the role that has been changed.

2. The communication apparatus according to claim 1, wherein the role setting section sets the role from any of a communication terminal, a controller connected to an external network that is an external communication network of the communication network, and an access point that relays communication between a controller and a communication terminal.

3. The communication apparatus according to claim 2, wherein, in a case where the role is a communication terminal, the role setting section changes the role to an access point on a basis of a load of a superordinate access point of the communication apparatus.

4. The communication apparatus according to claim 2, wherein, in a case where the role is a communication terminal or an access point, the role setting section changes the role to a controller on a basis of a load of a superordinate controller of the communication apparatus.

5. The communication apparatus according to claim 4, wherein, in a case where the communication terminal is able to be connected to the external network, the operation control section changes the role to a controller.

6. The communication apparatus according to claim 4, wherein, in a case where the role is changed to a controller, the operation control section causes at least some of subordinate access points of the superordinate controller to be connected to the communication apparatus.

7. The communication apparatus according to claim 2, wherein, in a case where the role is an access point, the role setting section changes the role to a communication terminal on a basis of a load of the communication apparatus.

8. The communication apparatus according to claim 7, wherein, in a case where there has been no data transfer for a predetermined length of time or longer, the role setting section changes the role to a communication terminal.

9. The communication apparatus according to claim 7, wherein,
in a case where there is an access point having a low load near the communication apparatus, the role setting section changes the role to a communication terminal, and
the operation control section causes the communication apparatus to be connected to the access point having the low load.

10. The communication apparatus according to claim 2, wherein, in a case where the role is a controller, the role setting section changes the role to an access point or a communication terminal on a basis of a status of access to the external network.

11. The communication apparatus according to claim 10, wherein, in a case where access to the external network is absent for a predetermined length of time or longer, the role setting section changes the role to a communication terminal.

12. The communication apparatus according to claim 10, wherein,
in a case where there is a controller having a low load near the communication apparatus, the role setting section changes the role to an access point, and
the operation control section causes the communication apparatus to be connected to the controller having the low load.

13. The communication apparatus according to claim 10, wherein,
in a case where there are a controller having a low load and an access point having a low load near the communication apparatus, the role setting section changes the role to a communication terminal, and
the operation control section causes the communication apparatus to be connected to the access point having the low load.

14. The communication apparatus according to claim 2, wherein, when a failure in access to the external network has occurred in a case where the role is a communication terminal or an access point, the role setting section changes the role to a controller.

15. The communication apparatus according to claim 1, wherein the role setting section changes the role to a role on a layer higher than a current layer, along with an increase of a load of the communication network.

16. The communication apparatus according to claim 1, wherein the role setting section changes the role to a role on a layer lower than a current layer, along with a decrease of a load of the communication network.

17. The communication apparatus according to claim 1, wherein the role setting section further changes the role according to user operation.

18. The communication apparatus according to claim 1, wherein the monitoring section monitors at least one of a load of each apparatus included in the communication network and a status of communication between the apparatuses.

19. The communication apparatus according to claim 1, wherein the monitoring section monitors a status of access from the communication network to an external communication network.

20. A communication control method performed by a communication apparatus, the communication control method comprising:
monitoring a status of a communication network having a hierarchical structure;
setting a role in the hierarchical structure on a basis of the status of the communication network; and
controlling execution of operation of the role that has been changed.
